# FASCICULE DE BREVET EUROPEEN

(11) **EP 3 149 918 B1**
(45) Date de publication et mention de la délivrance du brevet: **01.07.2020**
(21) Numéro de dépôt: 15728068.6
(22) Date de dépôt: 19.05.2015
(51) Int. Cl.: H04L 29/08, H04L 12/54, H04L 29/06

(54) **TÉLÉCHARGEMENT DE CONTENU ET MISE A DISPOSITION DE RÉSEAUX**
INHALT DOWNLOADING UND NETZZUGANG
CONTENT DOWNLOADING AND NETWORK AVAILABILITY

(30) Priorité: 26.05.2014 FR 1454741
(43) Date de publication de la demande: 05.04.2017
(73) Titulaire: ORANGE, 75015 Paris (FR)
(72) Inventeur: HOUZE, Patrice, F-35000 Rennes (FR); MORY, Emmanuel, F-35830 Betton (FR)
(86) Numéro de dépôt international: PCT/FR2015/051311
(87) Numéro de publication internationale: WO 2015/181468

(56) Documents cités:
- WO-A1-2010/099984
- US-A1- 2008 301 039

## Description

### Domaine de l'invention

Le domaine de l'invention est celui du traitement de contenus multimédia. On entend par contenu multimédia tout contenu audio et/ou visuel, ou plus généralement tout autre contenu numérique.

L'invention concerne plus spécifiquement la transmission et la réception de tels contenus multimédia, en particulier leur téléchargement continu, aussi appelé *streaming.*

Elle s'applique notamment à tout terminal client (dans la suite appelé simplement terminal) capable de communiquer sur un réseau de télécommunications étendu pour accéder à un contenu multimédia via une adresse universelle, aussi appelée URI (de l'anglais « *Uniform Ressource identifier »).*

### Présentation de l'art antérieur

L'accès à un contenu du type précité à partir d'un terminal est déclenché généralement par une requête au travers d'une adresse URI du contenu. Un tel accès utilise par exemple le protocole http (de l'anglais « *Hyper Text Transport Protocol »)* qui est un protocole de communication client-serveur développé pour les réseaux de télécommunications étendus, tels qu'Internet et en particulier le Web.

Une fois que la communication a été établie entre le terminal et le serveur selon le protocole http précité, une application de téléchargement de contenu installée dans le terminal établit une communication avec le serveur en vue du téléchargement de contenu, selon un protocole de communication prédéterminé, tel qu'en particulier le protocole TCP (de l'anglais « *Transmission Control Protocol »*)*.* De façon connue en soi, le protocole TCP permet de contrôler l'état de la transmission des données du contenu requis entre le serveur et le terminal.

Un réseau de type internet fournit une liaison entre le terminal et le serveur qui bénéficie d'une bande passante associée à un débit de transmission de données déterminé. Un tel débit est limité à une valeur prédéterminée qui est fonction du type d'abonnement au réseau Internet auquel a souscrit l'utilisateur du terminal.

Un tel débit peut s'avérer insuffisant pour certaines opérations de transfert de données, en particulier lorsque le terminal requiert le téléchargement d'un contenu du type précité et dont le volume de données est élevé. Il en résulte une durée d'attente parfois prohibitive pour le téléchargement ou à un échec de ce dernier.

Le document « Improving TCP Performance over Wireless Networks with Collaborative Multi-Homed Mobile Hosts », Kyu-Han Kim and Kang G. Shin, décrit une solution qui permet de remédier à ce problème. A cet effet, il est proposé à un terminal requérant un contenu auprès d'un serveur, via un réseau Internet, de bénéficier de tout ou partie de la bande passante de plusieurs terminaux connectés entre eux sur un même réseau de télécommunications local. Ces terminaux se connectent au serveur via un module proxy installé sur le réseau Internet qui est chargé de gérer les connexions entre chacun des terminaux et le serveur.

Un inconvénient d'une telle solution est qu'elle nécessite une modification physique du réseau Internet. Elle est donc coûteuse. De plus, elle est très difficilement adaptative.

En effet, l'opérateur intervient sur son réseau pour répondre à un besoin local d'un ou plusieurs clients. Si ce besoin disparaît et qu'un nouveau besoin apparaît sur une autre zone du réseau, une autre intervention est nécessaire.

### Objet et résumé de l'invention

Un des buts de l'invention est de remédier à des inconvénients de l'état de la technique précité.

A cet effet, un objet de la présente invention concerne un procédé de téléchargement de contenu dans un premier terminal à partir d'un serveur, via un premier réseau de télécommunications étendu, comprenant une étape d'établissement d'une première communication à partir du premier terminal, selon un protocole de communication prédéterminé, au cours de laquelle le premier terminal émet une requête en téléchargement d'un contenu à destination du serveur, via le premier réseau de télécommunications étendu.

Un tel procédé est remarquable en ce qu'il comprend, au niveau du premier terminal, les étapes suivantes :
- interception de la requête en téléchargement de contenu,
- découverte d'au moins un deuxième terminal connecté au premier terminal via un réseau de télécommunications local, le deuxième terminal étant en outre connecté à un deuxième réseau de télécommunications étendu, au cours de laquelle le premier terminal:
   - envoie au deuxième terminal un message qui contient des informations d'identification du serveur,
   - reçoit en provenance du deuxième terminal un message d'offre de partage du deuxième réseau de télécommunications étendu, en vue du téléchargement de contenu, le message d'offre de partage contenant un identifiant de port associé au deuxième terminal,
- détermination d'au moins un premier segment de données du contenu à télécharger en fonction de l'offre de partage contenue dans le message reçu,
- établissement d'une deuxième communication à partir du premier terminal, selon le protocole de communication prédéterminé, au cours de laquelle le premier terminal, via le réseau de télécommunications local :
   - émet à destination du port associé au deuxième terminal une requête en téléchargement du premier segment de contenu déterminé,
   - reçoit en provenance du deuxième terminal le premier segment de contenu qui a été obtenu préalablement par le deuxième terminal suite à une connexion par ce dernier au serveur, via le deuxième réseau de télécommunications étendu, au moyen des informations d'identification du serveur envoyées par le premier terminal lors de l'étape de découverte.

Une telle disposition présente l'avantage de permettre à un terminal requérant le téléchargement d'un contenu auprès d'un serveur et se trouvant en visibilité d'un autre terminal, via un réseau de télécommunications local commun, de demander simplement à cet autre terminal une offre de contribution de la bande passante disponible sur le réseau de télécommunications étendu auquel est connecté cet autre terminal, pour accéder à un tel contenu.

Les réseaux de télécommunications étendus auxquels sont connectés respectivement les deux terminaux en visibilité sont par exemple de type Internet et sont aussi bien de type fixe (ADSL par exemple) que de type mobile (3G, 4G par exemple).

A cet effet, les deux terminaux sont configurés préalablement pour contenir chacun une couche protocolaire dédiée commune. Dans le cas par exemple du modèle OSI (de l'anglais « Open Systems Interconnection »), une telle couche protocolaire dédiée pourrait par exemple s'intercaler entre la couche protocolaire 4 et la couche protocolaire 5 pour permettre, au niveau du terminal requérant le téléchargement d'un contenu, de mettre en oeuvre les étapes précitées d'interception de la requête en téléchargement de contenu, de découverte des terminaux voisins, de détermination d'au moins un premier segment de données du contenu à télécharger, d'établissement d'une communication avec le serveur, via au moins un terminal voisin, et d'utiliser cette communication pour recevoir via le terminal voisin, le premier segment de données du contenu.

L'invention permet ainsi de résoudre le problème technique de la mise à disposition de bande passante supplémentaire auprès d'un terminal requérant le téléchargement d'un contenu, de façon flexible et adaptée à ses besoins.

En outre, l'invention permet avantageusement de ne pas nécessiter d'intervention physique de l'opérateur et de ne pas entraîner de modifications particulières sur les serveurs de contenus.

Selon un mode de réalisation particulier, le message d'offre de partage reçu lors de l'étape de découverte contient en outre :
- le type auquel appartient le deuxième réseau de télécommunications étendu,
- l'adresse d'un équipement d'accès du deuxième terminal au deuxième réseau de télécommunications étendu,
- la bande passante offerte par le deuxième terminal.

Une telle disposition permet au terminal ayant requis le téléchargement d'un contenu d'identifier précisément le terminal contributeur de façon à ce que la couche protocolaire dédiée du terminal requérant puisse déterminer quel(s) segment(s) de données du contenu à télécharger il est possible de requérir auprès de ce terminal contributeur.

A cet égard, le terminal requérant a besoin de connaître la bande passante offerte par le terminal contributeur, ainsi que l'adresse de l'équipement d'accès de ce deuxième terminal, de façon à pouvoir diriger vers cette dernière sa ou ses requêtes en téléchargement de segment de contenu.

Le terminal requérant a également besoin de vérifier dans l'offre de contribution de bande passante émise par le terminal contributeur, que ce dernier n'est pas connecté au même réseau de télécommunications étendu que le terminal requérant. En effet, la coopération d'un terminal contributeur considéré via un réseau de télécommunication local (Wi-Fi par exemple) commun au terminal requérant le téléchargement de contenu n'a de réel intérêt que si le type de réseau de télécommunications étendu auquel est connecté le terminal contributeur est différent de celui auquel est connecté le terminal requérant.

Selon encore un autre mode de réalisation particulier, l'étape d'interception de la requête en téléchargement consiste à :
- déterminer si le contenu à télécharger est décomposable en au moins un premier segment de données,
- dans le cas d'une réponse positive, émettre une requête en découverte d'un ou plusieurs terminaux connectés au premier terminal via le réseau de télécommunications local,
- dans le cas d'une réponse négative :
   - poursuivre l'émission de la requête en téléchargement de contenu à destination dudit serveur,
   - recevoir le contenu en provenance du serveur.

Une telle disposition permet au terminal requérant, au niveau de sa couche protocolaire dédiée, d'intercepter la requête en téléchargement de contenu afin de vérifier si cette dernière peut être divisée en plusieurs requêtes différentes et indépendantes aptes à être envoyées respectivement à destination de différents terminaux contributeurs. A cet effet, la couche protocolaire dédiée vérifie que le contenu pour lequel le téléchargement est requis est décomposable en plusieurs segments de données. Si tel est le cas, la mise à contribution des terminaux voisins contributeurs est engagée. Sinon, un téléchargement classique du contenu directement auprès du serveur est engagé.

Selon encore un autre mode de réalisation particulier, dans le cas où le premier terminal détermine que le contenu à télécharger comprend un deuxième segment de données et que la bande passante du premier terminal est suffisante pour permettre le téléchargement du deuxième segment directement en provenance du serveur, il est procédé aux étapes suivantes :
- établissement d'une troisième communication à partir du premier terminal, selon le protocole de communication prédéterminé, au cours de laquelle le premier terminal, via le premier réseau de télécommunications étendu :
   - émet à destination du serveur une requête en téléchargement du deuxième segment de contenu,
   - reçoit le deuxième segment de contenu en provenance du serveur.

Une telle disposition est mise en oeuvre dans le cas où le contenu demandé par le terminal requérant est décomposable en au moins deux segments de données et que le terminal requérant dispose d'une bande passante suffisante sur son réseau de télécommunications étendu pour télécharger au moins un des deux segments de données du contenu, directement auprès du serveur.

Selon encore un autre mode de réalisation particulier, à la suite de la réception des premier et deuxième segments, il est procédé, au niveau du premier terminal, aux étapes suivantes :
- agrégation des premier et deuxième segments selon un ordre prédéterminé,
- réception des premier et deuxième segments agrégés en réponse à la requête en téléchargement d'un contenu émise au cours de la première communication établie par le premier terminal.

Une telle disposition permet à la couche protocolaire dédiée du terminal qui a requis le téléchargement de contenu d'agréger les segments de données reçus aussi bien en provenance directement du serveur de contenus qu'en provenance du terminal contributeur, puis de réordonner ces segments en vue de leur téléchargement dans le terminal requérant.

Selon encore un autre mode de réalisation particulier, il est procédé aux étapes suivantes :
- découverte d'au moins un troisième terminal connecté au premier terminal via le réseau de télécommunications local, le troisième terminal étant en outre connecté à un troisième réseau de télécommunications étendu, au cours de laquelle le premier terminal:
   - envoie au troisième terminal un message qui contient des informations d'identification du serveur,
   - reçoit en provenance du troisième terminal un message d'offre de partage du troisième réseau de communication étendu, en vue du téléchargement de contenu, le message contenant un identifiant de port associé au troisième terminal,
- détermination d'au moins un troisième segment de données du contenu à télécharger en fonction de l'offre de partage contenue dans le message reçu,
- établissement d'une quatrième communication à partir du premier terminal, selon le protocole de communication prédéterminé, au cours de laquelle le premier terminal, via le réseau de télécommunications local :
   - émet à destination du port associé au troisième terminal une requête en téléchargement du troisième segment de contenu déterminé,
   - reçoit en provenance du troisième terminal le troisième segment de contenu qui a été obtenu préalablement par le troisième terminal suite à une connexion par ce dernier au serveur, via le troisième réseau de télécommunications étendu, au moyen des informations d'identification du serveur envoyées par le premier terminal lors de l'étape de découverte.

Une telle disposition présente un mode de réalisation dans lequel deux terminaux voisins du terminal qui a requis le téléchargement de contenu sont contributeurs.

Selon encore un autre mode de réalisation particulier, à la suite de la réception des premier, deuxième et troisième segments, il est procédé, au niveau du premier terminal, aux étapes suivantes :
- agrégation selon un ordre prédéterminé des premier, deuxième et troisième segments,
- réception des premier, deuxième et troisième segments agrégés, en réponse à la requête en téléchargement de contenu émise au cours de la première communication établie par le premier terminal.

Une telle disposition permet à la couche protocolaire dédiée du terminal qui a requis le téléchargement de contenu d'agréger l'ensemble des segments de données reçus aussi bien en provenance directement du serveur de contenus, qu'en provenance des différents terminaux contributeurs, puis de réordonner ces segments en vue de leur téléchargement dans le terminal requérant.

Les différents modes ou caractéristiques de réalisation précités peuvent être ajoutés indépendamment ou en combinaison les uns avec les autres, aux étapes du procédé de téléchargement défini ci-dessus.

L'invention concerne également un terminal apte à télécharger un contenu à partir d'un serveur, via un premier réseau de télécommunications étendu, comprenant un module d'établissement d'une première communication selon un protocole de communication prédéterminé qui est apte à émettre une requête en téléchargement d'un contenu à destination du serveur précité, via le premier réseau de télécommunications étendu Un tel terminal est notamment adapté pour mettre en oeuvre le procédé de téléchargement précité.

Le terminal selon l'invention est remarquable en ce qu'il comprend :
- un module d'interception apte à intercepter la requête en téléchargement de contenu,
- un module de découverte d'au moins un deuxième terminal connecté d'une part au premier terminal via un réseau de télécommunications local, et, d'autre part, à un deuxième réseau de télécommunications étendu, le module de découverte étant adapté pour :
   - envoyer au deuxième terminal un message qui contient des informations d'identification du serveur,
   - recevoir en provenance du deuxième terminal un message d'offre de partage du deuxième réseau de télécommunications étendu, en vue dudit téléchargement de contenu, le message d'offre de partage contenant un identifiant de port associé au deuxième terminal,
- un module de détermination apte à déterminer au moins un premier segment de données du contenu à télécharger en fonction de l'offre de partage contenue dans le message reçu,
- un module d'établissement d'une deuxième communication à partir du premier terminal, selon le protocole de communication prédéterminé, le module d'établissement d'une deuxième communication étant adapté pour, via le réseau de télécommunications local :
   - émettre à destination du port associé au deuxième terminal une requête en téléchargement du premier segment de contenu déterminé,
   - recevoir en provenance du deuxième terminal le premier segment de contenu qui a été obtenu préalablement par le deuxième terminal suite à une connexion par ce dernier au serveur, via le deuxième réseau de télécommunications étendu, au moyen des informations d'identification du serveur envoyées par le module de découverte.

L'invention concerne encore un procédé de mise à disposition d'un premier terminal, connecté à un premier réseau de télécommunications étendu, d'un deuxième réseau de télécommunications étendu auquel est connecté un deuxième terminal, en vue du téléchargement d'un contenu dans le premier terminal à partir d'un serveur.

Un tel procédé est remarquable en ce que en ce qu'il comprend, au niveau du deuxième terminal, les étapes suivantes :
- découverte d'une connexion du deuxième terminal au premier terminal via un réseau de télécommunications local, au cours de laquelle le deuxième terminal :
   - reçoit, en provenance du premier terminal, un message contenant des informations d'identification du serveur,
   - émet à destination du premier terminal une réponse au message reçu qui contient une offre de partage du deuxième réseau de télécommunications étendu en vue du téléchargement de contenu, une telle réponse contenant un identifiant de port associé au deuxième terminal,

- établissement d'une communication entre les premier et deuxième terminaux, au cours de laquelle le deuxième terminal :
   - reçoit sur ledit port, en provenance du premier terminal, via le réseau de télécommunications local, une requête en téléchargement d'un premier segment de contenu déterminé au préalable par le premier terminal à partir de l'offre de partage,
   - à partir des informations d'identification du serveur reçues, route à destination du serveur, via le deuxième réseau de télécommunications étendu, la requête en téléchargement du premier segment reçue,
   - reçoit en réponse le premier segment de contenu en provenance du serveur, via le deuxième réseau de télécommunications étendu,
   - émet le premier segment de contenu reçu à destination du premier terminal, via le réseau de télécommunications local.

Une telle disposition présente l'avantage de permettre à un terminal se trouvant en visibilité, via un réseau de télécommunications local commun à un autre terminal ayant requis préalablement le téléchargement d'un contenu auprès d'un serveur, de proposer simplement à cet autre terminal une offre de contribution de la bande passante disponible sur le réseau de télécommunications étendu auquel est connecté le terminal contributeur, pour que le terminal requérant puisse accéder à un tel contenu.

Les réseaux de télécommunications étendus auxquels sont connectés respectivement les deux terminaux en visibilité sont par exemple de type Internet et sont aussi bien de type fixe (ADSL par exemple) que de type mobile (3G, 4G par exemple).

A cet effet, les deux terminaux sont configurés préalablement pour contenir chacun une couche protocolaire dédiée commune. Dans le cas par exemple du modèle OSI (de l'anglais « Open Systems Interconnection »), une telle couche protocolaire pourrait par exemple s'intercaler entre la couche protocolaire 4 et la couche protocolaire 5 pour permettre, au niveau du terminal contributeur de bande passante, de mettre en oeuvre les étapes précitées de découverte d'une connexion au terminal requérant et d'établissement d'une communication avec le terminal requérant, et d'utiliser cette communication pour retransmettre, à destination du terminal requérant, le premier segment de données du contenu que le terminal contributeur a obtenu auprès du serveur.

Ainsi, la couche protocolaire dédiée du terminal contributeur lui permet avantageusement de router vers le serveur les requêtes en téléchargement de segments de contenu envoyées par le terminal requérant, sans établir lui-même une nouvelle connexion avec le serveur. En d'autres termes, le terminal contributeur constitue un relais IP (de l'anglais « Internet Protocol ») qui assure une fonction NAT (de l'anglais « Network Address Translation ») pour retransmettre les requêtes en téléchargement vers le serveur et, inversement, retransmettre les réponses du serveur à destination du terminal requérant.

Selon un mode de réalisation particulier, la réponse contenant l'offre de partage du deuxième réseau de télécommunications étendu contient en outre :
- le type auquel appartient le deuxième réseau de télécommunications étendu,
- l'adresse d'un équipement d'accès du deuxième terminal au deuxième réseau de télécommunications étendu,
- la bande passante offerte par le deuxième terminal.

Une telle disposition permet au terminal requérant le téléchargement d'un contenu d'identifier précisément le terminal contributeur de façon à pouvoir lui adresser la ou les requêtes en téléchargement de segments de contenus.

Une telle disposition permet également au terminal requérant de vérifier que le terminal contributeur n'est pas connecté au même réseau de télécommunications étendu que le terminal requérant.

L'invention concerne également un terminal apte à mettre à disposition d'un autre terminal connecté à un premier réseau de télécommunications étendu, un deuxième réseau de télécommunications étendu auquel est connecté le terminal, en vue du téléchargement d'un contenu dans l'autre terminal à partir d'un serveur. Un tel terminal est notamment adapté pour mettre en oeuvre le procédé précité de mise à contribution d'un réseau de télécommunications étendu.

Le terminal selon l'invention est remarquable en ce qu'il comprend :
- un module de découverte d'une connexion du terminal à l'autre terminal, via un réseau de télécommunications local, le module de découverte étant adapté pour :
   - recevoir, en provenance de l'autre terminal, une requête en découverte d'au moins un terminal connecté à l'autre terminal via un réseau de télécommunications local, ladite requête contenant des informations d'identification du serveur,
   - émettre à destination de l'autre terminal, via le réseau de télécommunications local, une réponse à la requête en découverte qui contient une offre de partage du deuxième réseau de télécommunications étendu, en vue du téléchargement de contenu, la réponse contenant un identifiant de port associé au terminal précité,
- un module d'établissement d'une communication entre les deux terminaux, le module d'établissement de communication étant adapté pour :
   - recevoir sur le port du terminal, en provenance de l'autre terminal, via le réseau de télécommunications local, une requête en téléchargement d'un premier segment de contenu déterminé au préalable par l'autre terminal à partir de l'offre de partage,
   - à partir des informations d'identification du serveur reçues, router à destination du serveur, via le deuxième réseau de télécommunications étendu, la requête en téléchargement du premier segment reçue,
   - recevoir en réponse le premier segment de contenu en provenance du serveur, via le deuxième réseau de télécommunications étendu,
   - émettre le premier segment de contenu reçu à destination de l'autre terminal, via le réseau de télécommunications local.

Compte tenu du fait que l'invention n'est mise en oeuvre que si le terminal requérant le téléchargement de contenu et le terminal contributeur contiennent chacun une couche protocolaire supplémentaire commune :
- le terminal requérant le téléchargement de contenu est également adapté pour être un terminal contributeur,
- le terminal contributeur est également adapté pour requérir le téléchargement d'un contenu.

L'invention concerne encore un programme d'ordinateur comportant des instructions pour mettre en oeuvre le procédé de téléchargement de contenu selon l'invention, lorsqu'il est exécuté sur un terminal ou plus généralement sur un ordinateur.

L'invention concerne encore un programme d'ordinateur comportant des instructions pour mettre en oeuvre le procédé de mise à contribution d'un réseau de télécommunications étendu selon l'invention, lorsqu'il est exécuté sur un terminal ou plus généralement sur un ordinateur.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré un programme d'ordinateur, ce programme comportant des instructions adaptées à la mise en oeuvre du procédé de téléchargement de contenu ou du procédé de mise à disposition d'un réseau de télécommunications étendu selon l'invention, tel que décrit ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé d'accès précité.

Le document US-2008/301039 décrit un procédé et système pour emprunter de la bande passante à des terminaux.

### Liste des figures

D'autres avantages et caractéristiques de l'invention apparaîtront plus clairement à la lecture de la description suivante de plusieurs modes de réalisation particuliers de l'invention, donnés à titre de simples exemples illustratifs et non limitatifs, et des dessins annexés, parmi lesquels :
- la figure 1 présente de façon schématique une architecture de streaming dans laquelle sont mis en oeuvre le procédé de téléchargement de contenu et le procédé de mise à contribution de bande passante selon un premier mode de réalisation de l'invention ;
- la figure 2 présente la structure simplifiée d'un terminal requérant le téléchargement d'un contenu selon un mode de réalisation de l'invention ;
- la figure 3 présente la structure simplifiée d'un terminal mettant à contribution son réseau de télécommunications étendu selon un mode de réalisation de l'invention ;
- la figure 4A présente de façon schématique les principales étapes d'un procédé de téléchargement de contenu selon un premier mode de réalisation de l'invention ;
- la figure 4B présente de façon schématique un premier détail de mise en oeuvre du procédé de la figure 4A ;
- la figure 4C présente de façon schématique un deuxième détail de mise en oeuvre du procédé de la figure 4A ;
- la figure 5 présente de façon schématique les principales étapes d'un procédé de téléchargement de contenu selon un deuxième mode de réalisation de l'invention ;
- la figure 6 présente de façon schématique les principales étapes d'un procédé de mise à disposition d'un réseau de télécommunications étendu selon un mode de réalisation de l'invention ;
- la figure 7 présente de façon schématique une architecture de streaming dans laquelle sont mis en oeuvre le procédé de téléchargement de contenus et le procédé de mise à contribution de bande passante selon un deuxième mode de réalisation de l'invention ;
- la figure 8 présente de façon schématique un diagramme des échanges entre les différents terminaux et le serveur de l'architecture de la figure 7 pour mettre en oeuvre le procédé de téléchargement de contenu et le procédé de mise à contribution de bande passante selon l'invention .

### Description d'un mode de réalisation particulier de l'invention

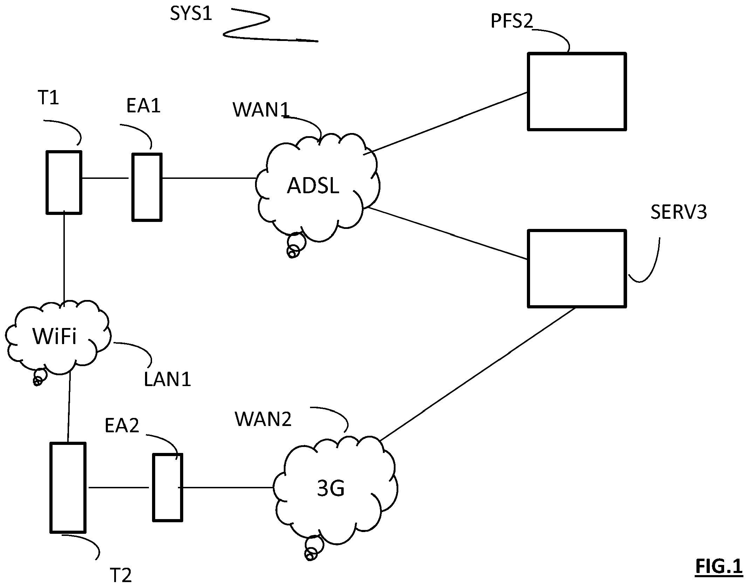

En relation avec la **figure 1****,** on présente une architecture dans laquelle est mis en oeuvre le procédé de téléchargement de contenu selon l'invention et le procédé de mise à disposition d'un réseau de télécommunications étendu selon l'invention.

Une telle architecture se présente sous la forme d'un système informatique SYS1 comprenant un terminal client T1, une plateforme de service PFS2 à laquelle est abonné l'utilisateur du terminal T1 et un serveur de contenus SERV3. Le serveur de contenus SERV3 est apte à fournir un contenu au terminal T1, en réponse à une requête de ce dernier, la fourniture d'un tel contenu étant gérée par la plateforme de service PFS2.

Dans l'exemple représenté sur la **figure 1****,** le terminal T1, la plateforme PFS2 et le serveur SERV3 communiquent entre eux via un premier réseau de télécommunications étendu WAN1, tel que par exemple de type IP (abréviation anglaise de « Internet Protocol »). Dans l'exemple représenté, le réseau WAN1 est de type fixe et plus particulièrement ADSL (de l'anglais « *Asymmetric Digital Subscriber Line »).* Le terminal T1 est connecté au réseau WAN1 au moyen d'un équipement d'accès EA1, tel que par exemple une passerelle domestique ou d'entreprise.

La plateforme de service PFS2 propose différents types de contenus à l'utilisateur du terminal T1, tels que par exemple:
- des contenus télévisuels TV, notamment ceux à diffusion programmée dans une grille de programmes,
- des catalogues VOD (abréviation anglaise de « Video On Demand »),
- des catalogues de vidéos et/ou d'images et/ou de photos,
- des catalogues de musique ou de podcasts,
- des catalogues de livres numériques,
- des catalogues d'applications et/ou de services.

Les contenus précités peuvent selon les services proposés par la plateforme PFS2 être préalablement décomposés en une pluralité de segments de données temporels encodés respectivement selon différents profils d'encodage possibles. De telles opération de décomposition et d'encodage sont mises en oeuvre dans un équipement dédié non représenté, qui est relié au serveur de contenus SERV3.

Le terminal T1 est également connecté à un réseau de télécommunications local LAN1 qui utilise classiquement des moyens de connexion sans fil courte portée, par exemple de type WiFi, ou bien des moyens de connexion filaires, par exemple de type courant porteur en ligne CPL.

Le terminal T1 est par ailleurs connecté à un terminal T2 via le réseau de télécommunications local LAN1. Le terminal T2 est quant à lui adapté pour communiquer avec le serveur SERV3 via un deuxième réseau de télécommunications étendu WAN2, tel que par exemple de type IP. Dans l'exemple représenté, le réseau WAN2 est de type mobile et plus particulièrement 3G. Le terminal T2 est connecté au réseau WAN2 au moyen d'un équipement d'accès EA2, tel que par exemple une passerelle domestique ou d'entreprise.

Dans l'exemple représenté, l'architecture choisie pour illustrer l'invention est une architecture dite *streaming* basée sur l'utilisation du protocole HTTP. Classiquement, le terminal client T1 souhaite entrer en communication avec le serveur de contenus SERV3 pour télécharger un contenu multimédia composé d'un ou plusieurs médias (audio, vidéo, etc.).

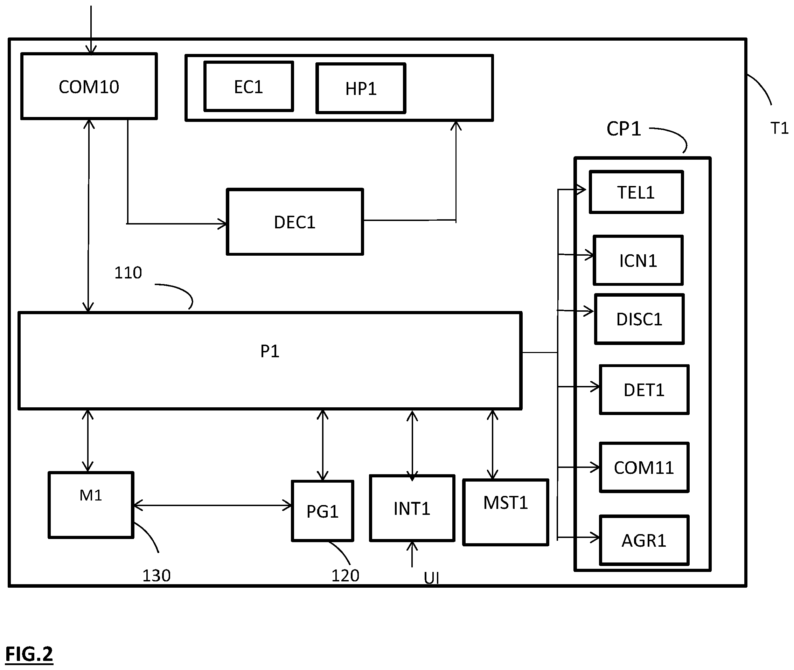

En relation avec la **figure 2****,** on considère maintenant la structure simplifiée du terminal T1 de téléchargement de contenus, selon un exemple de réalisation de l'invention. Un tel terminal est adapté pour mettre en oeuvre le procédé de téléchargement de contenu selon l'invention qui va être décrit ci-dessous.

Le terminal T1 est par exemple un ordinateur portable ou bien un téléphone portable, un smartphone (« téléphone intelligent »), une tablette, etc...

Dans l'exemple représenté à la **figure 2****,** le terminal T1 comprend des ressources physiques et/ou logicielles, en particulier une unité de traitement 110, équipée par exemple d'un processeur P1, et pilotée par un programme d'ordinateur PG1 120, stocké dans une mémoire M1 130 et mettant en oeuvre le procédé de téléchargement de contenu selon l'invention. Le terminal T1 comprend classiquement un module de communication COM10 qui fonctionne selon un protocole de communication prédéterminé, tel qu'en particulier le protocole TCP, et qui est adapté pour :
- émettre depuis le terminal T1 et à destination du serveur SERV3 de la **figure 1****,** via le réseau WAN1 de la **figure 1****,** une requête en téléchargement de contenu,
- recevoir en réponse du serveur SERV3, via le réseau WAN1, le contenu requis.

A l'initialisation, les instructions de code du programme d'ordinateur PG1 120 sont par exemple chargées dans une mémoire RAM (non représentée) avant d'être exécutées par le processeur P1 de l'unité de traitement 110. Le processeur de l'unité de traitement 110 met en oeuvre les étapes du procédé de téléchargement de contenu qui va être décrit ci-dessous, selon les instructions du programme d'ordinateur 120.

De façon connue en tant que telle, le terminal T1 comprend également :
- un module INT1 de traitement des interactions utilisateurs UI,
- un écran de visualisation EC1,
- un haut-parleur HP1,
- une interface DEC1 de décodage audio/vidéo des contenus de type texte, audio, vidéo ou audiovisuels, ladite interface étant adaptée pour transmettre les signaux décodés à l'écran EC1 ou dans le haut-parleur HP1,
- une mémoire MST1 de stockage temporaire,
- un module TEL1 de téléchargement de contenu.

Selon l'invention, le terminal T1 comprend en outre :
- un module d'interception ICN1 apte à intercepter une requête en téléchargement de contenu émise par le module de communication COM10 du terminal T1,
- un module de découverte DISC1 apte à découvrir le terminal T2 représenté à la **figure 1****,** dans le réseau de télécommunication local LAN1 représenté également à la **figure 1****,**
- un module de détermination DET1 apte à déterminer au moins un segment de données du contenu à télécharger,
- un module COM11 d'établissement d'une communication à partir du terminal T1, selon le protocole de communication prédéterminé TCP, ledit module COM11 permettant au terminal T1 d'envoyer une requête en téléchargement du segment de données déterminé, via le réseau de télécommunications local LAN1, à destination du terminal T2,
- un module AGR1 d'agrégation de segments de données de contenu.

Les modules ICN1, DISC1, DET1, COM11 et AGR1, qui seront décrits plus en détail dans la suite de la description, sont pilotés par le processeur P1 de l'unité de traitement 110.

Selon un exemple de réalisation, les modules ICN1, DISC1, DET1, COM11 et AGR1 sont avantageusement rassemblés au sein d'une nouvelle couche protocolaire CP1 du modèle OSI qui est disposée de préférence entre la couche « transport » n °4 et la couche « session » n °5.

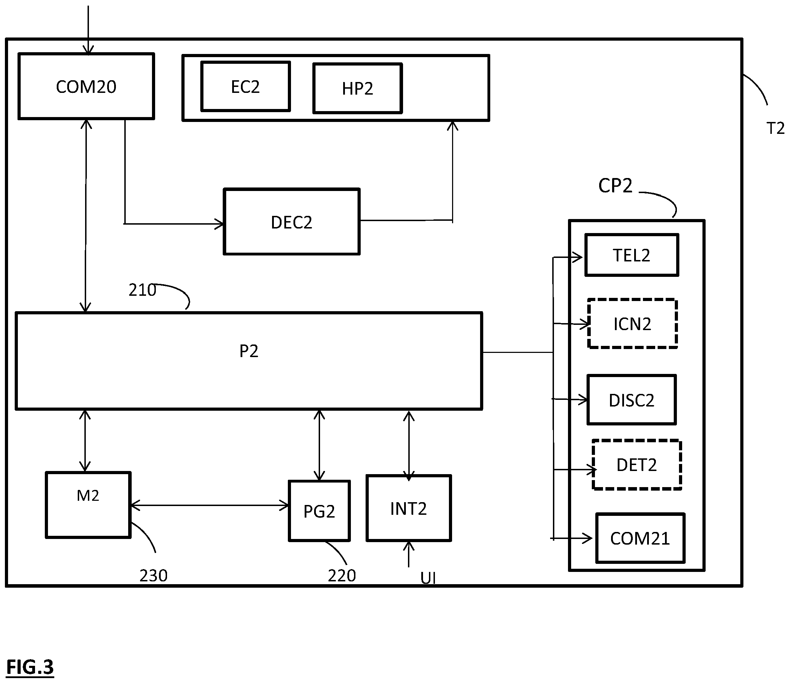

En relation avec la **figure 3****,** on considère maintenant la structure simplifiée du terminal T2 représenté sur la **figure 1****,** selon un exemple de réalisation de l'invention. Un tel terminal est adapté pour mettre en oeuvre le procédé selon l'invention qui va être décrit ci-dessous et qui est destiné à mettre en oeuvre la mise à contribution du réseau de télécommunications étendu auquel est connecté le terminal T2.

Le terminal T2 est par exemple un ordinateur portable ou bien un téléphone portable, un smartphone (« téléphone intelligent »), une tablette, etc...

Dans l'exemple représenté à la **figure 3****,** le terminal T2 comprend des ressources physiques et/ou logicielles, en particulier une unité de traitement 210, équipée par exemple d'un processeur P2, et pilotée par un programme d'ordinateur PG2 220, stocké dans une mémoire M2 230 et mettant en oeuvre le procédé de mise à contribution de réseau de télécommunications étendu selon l'invention. Le terminal T2 comprend classiquement un module de communication COM20 qui fonctionne selon un protocole de communication prédéterminé, tel qu'en particulier le protocole TCP, et qui est adapté pour établir des communications, via le réseau WAN2 de la **figure 1****,** avec notamment le serveur SERV3 de la **figure 1****.**

A l'initialisation, les instructions de code du programme d'ordinateur PG2 220 sont par exemple chargées dans une mémoire RAM (non représentée) avant d'être exécutées par le processeur P2 de l'unité de traitement 210. Le processeur de l'unité de traitement 210 met en oeuvre les étapes du procédé de mise à contribution de réseau de télécommunications étendu qui va être décrit ci-dessous, selon les instructions du programme d'ordinateur 220.

De façon connue en tant que telle, le terminal T2 comprend également :
- un module INT2 de traitement des interactions utilisateurs UI,
- un écran de visualisation EC2,
- un haut-parleur HP2,
- une interface DEC2 de décodage audio/vidéo des contenus de type texte, audio, vidéo ou audiovisuels, ladite interface étant adaptée pour transmettre les signaux décodés à l'écran EC2 ou dans le haut-parleur HP2,
- un module TEL2 de téléchargement de contenu.

Selon l'invention, le terminal T2 comprend en outre :
- un module de découverte DISC2 apte à découvrir le terminal T1 représenté à la **figure 1****,** dans le réseau de télécommunication local LAN1 représenté également à la **figure 1****,**
- un module de communication COM21 fonctionnant selon le protocole de communication prédéterminé TCP, via le réseau de télécommunications local LAN1, et permettant au terminal T2 de recevoir en provenance du terminal T1, via le réseau LAN1, une requête en téléchargement d'un segment de données déterminé du contenu à télécharger.

Les modules DISC2 et COM21, qui seront décrits plus en détail dans la suite de la description, sont pilotés par le processeur P2 de l'unité de traitement 210.

Selon un exemple de réalisation, les modules DISC2 et COM21 sont avantageusement rassemblés au sein d'une nouvelle couche protocolaire CP2 du modèle OSI qui est disposée de préférence entre la couche « transport » n °4 et la couche « session » n °5.

En particulier, conformément à l'invention, la nouvelle couche protocolaire du terminal T1 est capable de dialoguer avec la nouvelle couche protocolaire du terminal T2, via le réseau de télécommunications local LAN1.

En outre, le terminal T1 est adapté pour, conformément à l'invention, mettre également à contribution son réseau de télécommunications étendu WAN1. A cet effet :
- le module de découverte DISC1 du terminal T1 est adapté pour mettre en oeuvre les fonctionnalités du module de découverte DISC2 précité,
- le module de communication COM11 du terminal T1 est adapté pour mettre en oeuvre les fonctionnalités du module de communication COM21 précité.

De façon correspondante, le terminal T2 est adapté pour, conformément à l'invention, requérir le téléchargement d'un contenu auprès du serveur SERV3. A cet effet, le terminal T2 est adapté pour inclure également :
- un module d'interception ICN2 apte à intercepter une requête en téléchargement de contenu émise par le module de communication COM20 du terminal T2,
- un module de détermination DET2 apte à déterminer au moins un segment de données du contenu à télécharger,
- un module AGR2 d'agrégation de segments de données de contenu.

En outre :
- le module de découverte DISC2 du terminal T2 est adapté pour mettre en oeuvre les fonctionnalités du module de découverte DISC1 précité,
- le module de communication COM21 du terminal T2 est adapté pour mettre en oeuvre les fonctionnalités du module de communication COM11 précité.

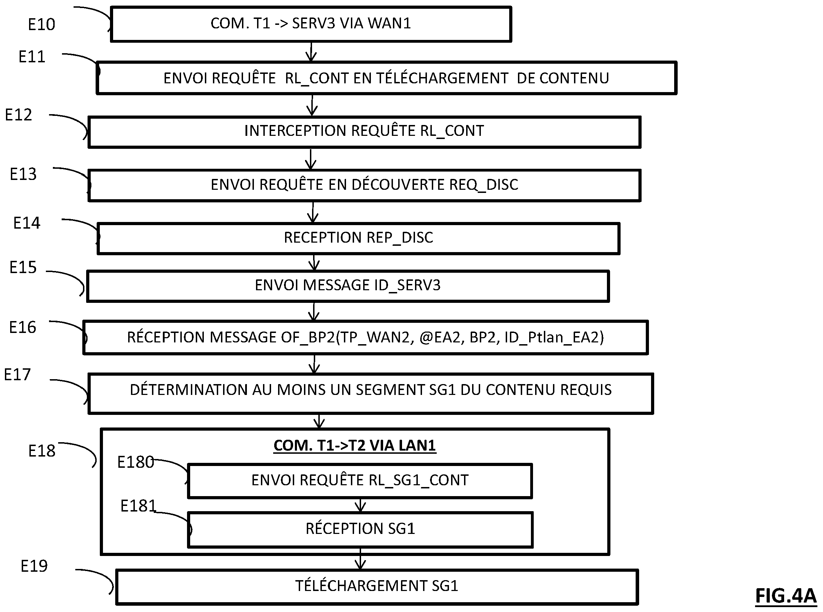

En relation avec la **figure 4A****,** on présente maintenant les étapes du procédé de téléchargement de contenu conformément à un premier mode de réalisation selon l'invention. Dans ce premier mode de réalisation représenté, ledit procédé de téléchargement est mis en oeuvre par le terminal T1 représenté sur les **figures 1** et **2**.

Au cours d'une étape E10 représentée à la **figure 4A****,** le module de communication COM10 du terminal T1 établit une communication avec le serveur SERV3 de la **figure 1****,** via le réseau de télécommunications étendu WAN1.

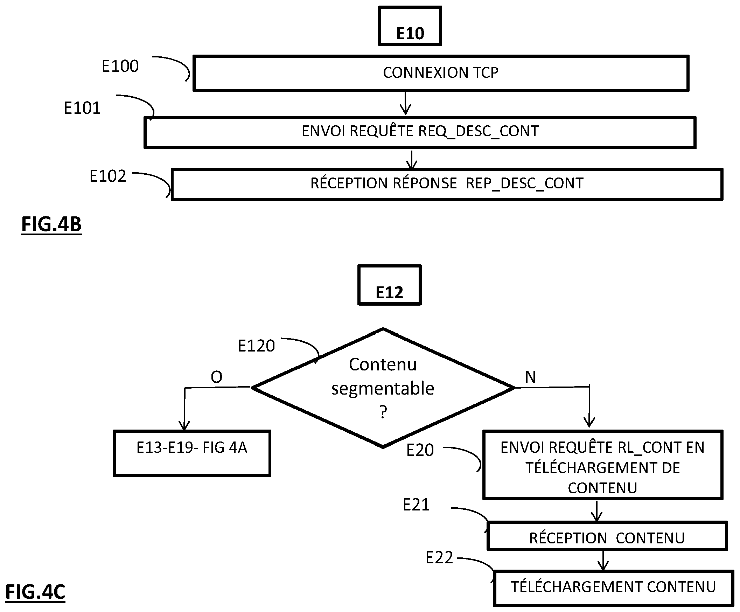

Un exemple d'un tel établissement d'une communication est représenté sur la **figure 4B****.**

L'étape E10 consiste, par exemple, à :
- établir, au cours d'une sous-étape E100, une connexion selon le protocole prédéterminé TCP, à destination du serveur SERV3,
- émettre, au cours d'une sous-étape E101, auprès du serveur de contenus SERV3, une requête REQ_DESC_CONT en téléchargement d'informations de description relatives à un contenu que le terminal T1 souhaite télécharger,
- recevoir en provenance du serveur SERV3, au cours d'une sous-étape E102, un message de réponse REP_DESC_CONT qui contient lesdites informations de description.

De telles informations de description se présentent par exemple sous la forme d'un ou plusieurs fichiers de description intermédiaires, appelés aussi documents, ou manifests, ou encore ressources, contenant les adresses d'une pluralité de segments composant un contenu considéré, en association avec les différents profils d'encodage attribués à chaque segment.

Une fois la communication établie conformément à l'étape E10 précitée, au cours d'une étape E11 représentée à la **figure 4A****,** le module de communication COM10 du terminal T1 émet à destination du serveur SERV3, via le réseau de télécommunications étendu WAN1, une requête RL_CONT en téléchargement de contenu.

L'étape E11 consiste à requérir le téléchargement du contenu dans sa globalité dans le cas où le contenu n'est pas segmentable ou bien à requérir un ou plusieurs segments de ce contenu, dans le cas où le contenu est segmentable.

Au cours d'une étape E12 représentée à la **figure 4A****,** le module ITN1 du terminal T1 intercepte la requête RL_CONT en téléchargement de contenu, en vue d'analyser le type de contenu requis. Un exemple de mise en oeuvre de l'étape d'interception E12 sera décrit plus loin dans la description en référence à la **figure 4C****.**

Au cours d'une étape E13 représentée à la **figure 4A****,** dans le cas où le contenu analysé est segmentable, le module de découverte DISC1 du terminal T1 émet, dans le réseau de télécommunications local LAN1, une requête REQ_DISC en découverte d'un ou plusieurs terminaux susceptible d'être connecté au terminal T1.

Au cours d'une étape E14 représentée à la **figure 4A****,** dans le cas où le terminal T2 est connecté au réseau local LAN1, le module de découverte DISC1 du terminal T1 reçoit en provenance du module de découverte correspondant DISC2 du terminal T2, via le réseau local LAN1, une réponse REP_DISC indiquant au terminal T1 que le terminal T2 est connecté au réseau local LAN1.

Au cours d'une étape E15 représentée à la **figure 4A****,** le module COM11 du terminal T1 envoie au terminal T2, via le réseau local LAN1, un message ID_SERV3 qui contient des informations d'identification du serveur SERV3. De telles informations d'identification sont par exemple l'adresse IP du serveur SERV3, notée @SERV3, et l'identifiant du port de ce dernier, noté ID_PT_SERV3.

Si à l'issue d'une durée prédéterminée, le terminal T1 ne reçoit pas de réponse du terminal T2, il est mis fin à la procédure de découverte du terminal T2.

Sinon, au cours d'une étape E16 représentée à la **figure 4A****,** le module COM11 du terminal T1 reçoit en provenance du terminal T2, via le réseau local LAN1, un message OF_BP2 d'offre de partage du réseau de télécommunications étendu WAN2 auquel est connecté le terminal T2, en vue du téléchargement du contenu requis. Le message OF_BP2 contient notamment :
- le type TP_WAN2 auquel appartient le réseau étendu WAN2, « 3G » dans l'exemple représenté à la **figure 1****,**
- l'adresse IP @EA2 de la passerelle EA2 du terminal T2 dans le réseau étendu WAN2,
- la bande passante BP2 offerte par le terminal T2, c'est-à-dire la capacité de bande passante descendante disponible sur la ligne de la passerelle EA2,
- un identifiant ID_PTIan_EA2 du port de la passerelle EA2 du terminal T2 dans le réseau local LAN1.

Dans le cas où le terminal T2 est incapable de partager son réseau de télécommunications étendu WAN2, selon un mode de réalisation non représenté, le module COM11 du terminal T1 reçoit en provenance du terminal T2, via le réseau local LAN1, un message d'invalidation du partage.

Selon un mode de réalisation alternatif, l'étape E16 est mise en oeuvre avant l'étape E15.

Par ailleurs, on comprend que l'invention peut aussi bien être mise en oeuvre en mode PULL qu'en mode PUSH.

En mode PULL, le module COM11 du terminal T1 requiert explicitement auprès du terminal T2 une offre de partage du réseau étendu WAN2 auquel est connecté le terminal T2. Le message OF_BP2 est ainsi reçu au cours de l'étape E16 précitée, en réponse à la requête explicite du terminal T1.

En mode PUSH, le message OF_BP2 est reçu au cours de l'étape E16 précitée, de façon spontanée en provenance du terminal T2. Le mode PUSH est par exemple mis en oeuvre lorsque la bande passante BP2 disponible sur le réseau étendu WAN2 auquel est connecté le terminal T2 n'est pas utilisée dans son intégralité.

Bien sûr, dans le cas où plusieurs terminaux sont découverts par le terminal T1, une combinaison de ces deux modes peut avantageusement être mise en œuvre, un message d'offre de partage en provenance d'un premier terminal découvert étant reçu spontanément par le module COM11 du terminal T1, et un autre message d'offre de partage en provenance d'un deuxième terminal découvert étant reçu en réponse à une requête explicite du module COM11 du terminal T1.

Au cours d'une étape E17 représentée à la **figure 4A****,** le module DET1 du terminal T1 détermine au moins un segment de données SG1 du contenu à télécharger en fonction des informations mentionnées dans le message d'offre de partage OF_BP2 reçu.

Une telle étape de détermination est par exemple mise en oeuvre :
- à partir des informations de description relatives au contenu que le terminal T1 souhaite télécharger et qui sont contenues dans le message REP_DESC_CONT que le terminal T1 a reçu au cours de l'étape E10 précitée,
- et de l'évaluation de la quantité de bande passante BP1 dont dispose localement le terminal T1.

Au cours d'une étape E18 représentée à la **figure 4A****,** le module COM11 du terminal T1 établit une communication avec le terminal T2, selon le protocole de communication prédéterminé TCP, via le réseau local LAN1.

A cet effet, au cours d'une sous-étape E180 représentée à la **figure 4A****,** le module de COM11 du terminal T1 émet, via le réseau local LAN1, à destination du port de la passerelle EA2 du terminal T2 qui est associé à l'identifiant ID_PTIan_EA2 précédemment reçu, une requête RL_SG1_CONT en téléchargement du premier segment SG1 déterminé. Une telle requête contient par exemple l'adresse URL d'accès au segment SG1, telle que contenue dans le fichier de description du contenu à télécharger présent dans le message REP_DESC_CONT que le terminal T1 a reçu au cours de l'étape E10 précitée.

Au cours d'une sous-étape E181 représentée à la **figure 4A****,** le module COM11 du terminal T1 reçoit en provenance du terminal T2, via le réseau local LAN1, le premier segment SG1. Le premier segment SG1 a été obtenu préalablement par le terminal T2, en réponse à une requête émise par ce dernier au serveur SERV3, via son réseau étendu WAN2. Ladite requête contient notamment :
- l'adresse IP @SERV3 du serveur SERV3,
- l'identifiant ID_PT_SERV3 du port du serveur SERV3,
- l'adresse IP @EA2 de la passerelle EA2 du terminal T2 dans le réseau étendu WAN2,
- un identifiant ID_Ptwan_EA2 du port de la passerelle EA2 du terminal T2 dans le réseau étendu WAN2.

Au cours d'une étape E19 représentée à la **figure 4A****,** le segment SG1 reçu est téléchargé dans le module TEL1 du terminal T1.

On va maintenant décrire, en relation avec la **figure 4C****,** un exemple de l'étape E12 d'interception de requête RL_CONT en téléchargement de contenu.

L'étape d'interception E12 consiste à :
- déterminer, au cours d'une sous-étape E120, si le contenu à télécharger est décomposable en au moins un premier segment de données SG1,
- dans le cas d'une réponse positive, mettre en oeuvre les étapes E13 à E19 précitées,
- dans le cas d'une réponse négative :
   - poursuivre, au cours d'une étape E20, l'émission de la requête RL_CONT en téléchargement de contenu à destination du serveur SERV3, via le réseau de télécommunications étendu WAN1,
   - recevoir, au cours d'une étape E21, le contenu en provenance du serveur SERV3,
   - télécharger, au cours d'une étape E22, le contenu reçu dans le module TEL1 du terminal T1.

On entend par contenu segmentable, un contenu téléchargeable via le réseau étendu WAN1 ou le réseau étendu WAN2 :
- soit par segment de données temporel,
- soit par « byte range » (portion identifiée d'octets),
- soit par couche selon par exemple la technologie SVC (de l'anglais « Scalable Video Codée »).

Ces trois modes de téléchargement s'appliquent aussi bien pour un contenu VOD préalablement encodé qu'un contenu diffusé en direct, c'est-à-dire encodé et segmenté à la volée.

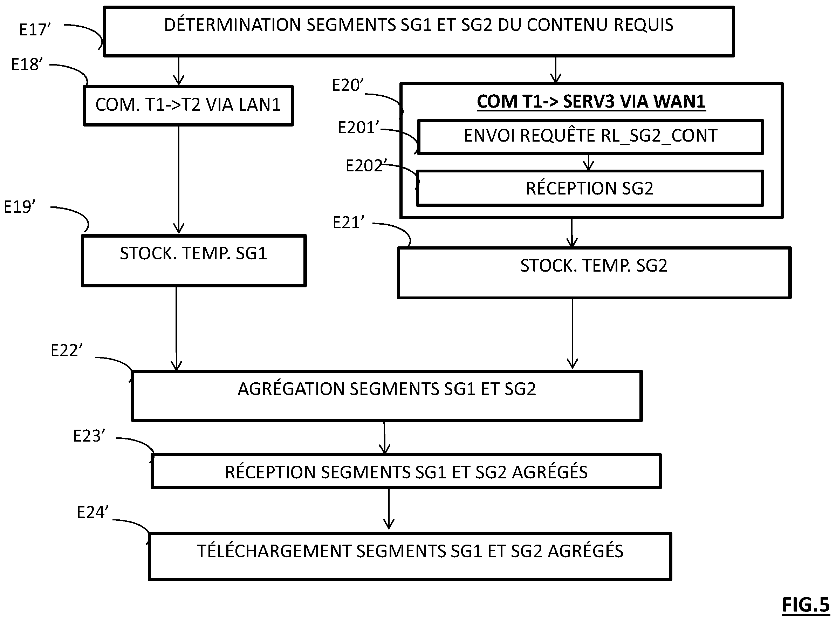

En relation avec la **figure 5****,** on présente maintenant un procédé de téléchargement de contenu conformément à un deuxième mode de réalisation selon l'invention. Dans ce deuxième mode de réalisation représenté, ledit procédé de téléchargement est toujours mis en oeuvre par le terminal T1 représenté sur les **figures 1** et **2****.**

Ce deuxième mode de réalisation est identique au premier mode de réalisation de la **figure 4A** jusqu'à l'étape E16. Par conséquent, les étapes E10 à E16 ne seront pas à nouveau représentées sur la **figure 5****.** Dans ce deuxième mode de réalisation l'étape E17 est remplacée par l'étape E17' de la **figure 5****,** au cours de laquelle le module DET1 du terminal T1 détermine, en plus du premier segment SG1 précité, un deuxième segment SG2 de contenu à télécharger, ce deuxième segment SG2 pouvant être directement requis par le terminal T1 auprès du serveur SERV3.

Au cours d'une étape E18' représentée à la **figure 5****,** le module COM11 du terminal T1 établit une communication avec le terminal T2, selon le protocole de communication prédéterminé TCP, via le réseau local LAN1, en vue de recevoir le premier segment de données SG1. L'étape E18' étant identique à l'étape E18 de la **figure 4A****,** elle ne sera pas décrite plus avant.

Au cours d'une étape E19' représentée à la **figure 5****,** le module COM11 du terminal T1 transmet le segment SG1 reçu dans la mémoire de stockage temporaire MST1 du terminal T1 qui est représentée sur la **figure 1****.**

Au cours d'une étape E20' représentée à la **figure 5****,** le module COM10 du terminal T1 établit une communication directement avec le serveur SERV3, selon le protocole de communication prédéterminé TCP, via le réseau étendu WAN1, en vue de recevoir le premier segment de données SG1.

A cet effet, au cours d'une sous-étape E201' représentée à la **figure 5****,** le module de COM10 du terminal T1 émet classiquement, via le réseau étendu WAN1, à destination du serveur SERV3, une requête RL_SG2_CONT en téléchargement du deuxième segment SG2 déterminé. Une telle requête contient par exemple l'adresse URL d'accès au segment SG2, telle que contenue dans le fichier de description du contenu à télécharger présent dans le message REP_DESC_CONT que le terminal T1 a reçu au cours de l'étape E10 précitée.

Au cours d'une sous-étape E202' représentée à la **figure 5****,** le module COM10 du terminal T1 reçoit en provenance du serveur SERV3, via le réseau étendu WAN1, le deuxième segment SG2 requis.

Au cours d'une étape E21' représentée à la **figure 5****,** le module COM10 du terminal T1 transmet le deuxième segment SG2 reçu dans la mémoire de stockage temporaire MST1 du terminal T1 qui est représentée sur la **figure 1****.**

Dans l'exemple représenté, l'ensemble des étapes E18' et E19' est mis en oeuvre parallèlement à l'ensemble des étapes E20' et E21'.

En variante, l'ensemble des étapes E18' et E19' pourrait être mis en oeuvre avant ou après l'ensemble des étapes E20' et E21'.

Au cours d'une étape E22' représentée à la **figure 5****,** le module AGR1 du terminal T1 agrège le premier segment SG1 et le deuxième segment SG2 selon un ordre prédéterminé, par exemple conformément à leur ordre d'apparition dans le contenu.

Au cours d'une étape E23' représentée à la **figure 5****,** le module AGR1 du terminal T1 transmet les segments SG1 et SG2 ainsi agrégés au module de communication COM10 du terminal T1 qui les reçoit en tant que réponse à la requête RL_CONT en téléchargement de contenu émise au cours de l'étape E10 de la **figure 4A****.**

Au cours d'une étape E24' représentée à la **figure 5****,** les segments SG1 et SG2 agrégés reçus sont téléchargés dans le module TEL1 du terminal T1.

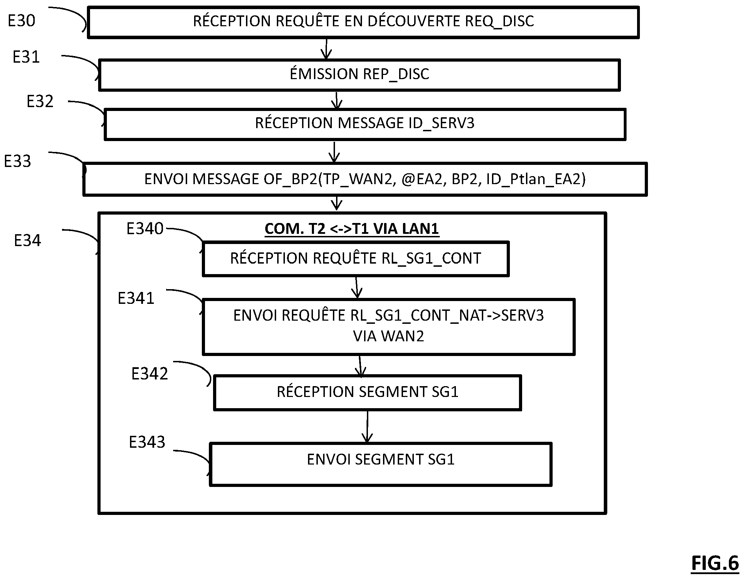

En relation avec la **figure 6****,** on présente maintenant les étapes du procédé de mise à disposition d'un réseau de télécommunications étendu conformément à un mode de réalisation selon l'invention. Dans ce mode de réalisation représenté, ledit procédé de mise à disposition est mis en oeuvre par le terminal T2 représenté sur les **figures 1** et **3****.**

Le but d'un tel procédé est que le terminal T2 mette son réseau étendu WAN2 à disposition du terminal T1, en vue que ce dernier puisse télécharger un contenu en provenance du serveur SERV3.

A cet effet, au cours d'une étape E30 représentée à la **figure 6****,** dans le cas où le contenu à télécharger est segmentable comme cela a été décrit plus haut dans la description, le module de découverte DISC2 du terminal T2 reçoit, dans le réseau de télécommunications local LAN1, en provenance du terminal T1, une requête REQ_DISC en découverte d'un ou plusieurs terminaux susceptible d'être connecté au terminal T1.

Au cours d'une étape E31 représentée à la **figure 6****,** dans le cas où le terminal T2 est effectivement connecté au réseau local LAN1, le module de découverte DISC2 du terminal T2 envoie à destination du module de découverte correspondant DISC1 du terminal T1, via le réseau local LAN1, une réponse REP_DISC indiquant au terminal T1 que le terminal T2 est connecté au réseau local LAN1.

Au cours d'une étape E32 représentée à la **figure 6****,** le module COM21 du terminal T2 reçoit en provenance du terminal T1, via le réseau local LAN1, un message ID_SERV3 qui contient des informations d'identification du serveur SERV3. De telles informations d'identification sont par exemple l'adresse IP du serveur SERV3, notée @SERV3, et l'identifiant du port de ce dernier, noté ID_PT_SERV3.

Au cours d'une étape E33 représentée à la **figure 6****,** le module COM21 du terminal T2 émet à destination du terminal T1, via le réseau local LAN1, un message OF_BP2 d'offre de partage du réseau de télécommunications étendu WAN2 auquel est connecté le terminal T2, en vue du téléchargement du contenu requis par le terminal T1. Le message OF_BP2 contient notamment :
- le type TP_WAN2 auquel appartient le réseau étendu WAN2, « 3G » dans l'exemple représenté à la **figure 1****,**
- l'adresse IP @EA2 de la passerelle EA2 du terminal T2 dans le réseau étendu WAN2,

- la bande passante BP2 offerte par le terminal T2, c'est-à-dire la capacité de bande passante descendante disponible sur la ligne de la passerelle EA2,
- un identifiant ID_PTIan_EA2 du port de la passerelle EA2 du terminal T2 dans le réseau local LAN1.

Dans le cas où le terminal T2 est incapable de partager son réseau de télécommunications étendu WAN2, selon un mode de réalisation non représenté, le module COM21 du terminal T2 envoie à destination du terminal T2, via le réseau local LAN1, un message d'invalidation du partage.

Selon un mode de réalisation alternatif, l'étape E33 est mise en oeuvre avant l'étape E32.

De façon correspondante au procédé de téléchargement de contenu décrit à la **figure 4A****,** le procédé de mise à disposition de réseau étendu peut aussi bien être mis en oeuvre en mode PULL qu'en mode PUSH.

En mode PULL, au cours de l'étape E33 précitée, le module COM21 du terminal T2 envoie le message OF_BP2 au terminal T1, en réponse à une requête explicite du terminal T1.

En mode PUSH, au cours de l'étape E33 précitée, le module COM21 du terminal T2 envoie de façon spontanée le message OF_BP2 au terminal T1, si par exemple le terminal T2 détermine que la bande passante BP2 disponible sur son réseau étendu WAN2 n'est pas utilisée dans son intégralité.

Au cours d'une étape E34 représentée à la **figure 6****,** une communication selon le protocole de communication prédéterminé TCP est établie entre le module COM21 du terminal T2 et le module de communication COM11 du terminal T1, via le réseau local LAN1.

A cet effet, au cours d'une sous-étape E340 représentée à la **figure 6****,** le terminal T2 reçoit en provenance du terminal T1, via le réseau local LAN1, sur le port de la passerelle EA2 du terminal T2 qui est associé à l'identifiant ID_PTIan_EA2 précédemment envoyé au terminal T1, une requête RL_SG1_CONT en téléchargement du premier segment SG1 de contenu. Une telle requête contient par exemple l'adresse URL d'accès au segment SG1, telle que contenue dans le fichier de description du contenu à télécharger présent dans le message REP_DESC_CONT que le terminal T1 a reçu au cours de l'étape E10 décrite en référence aux **figures 4A** et **4B****.**

Au cours d'une sous-étape E341 représentée à la **figure 6****,** le module COM20 du terminal T2 retransmet la requête RL_SG1_CONT au serveur SERV3, via le réseau étendu WAN2 du terminal T2, sous la forme d'une requête RL_SG1_CONT_NAT qui contient notamment :
- l'adresse IP @SERV3 du serveur SERV3,
- l'identifiant ID_PT_SERV3 du port du serveur SERV3,
- l'adresse IP @EA2 de la passerelle EA2 du terminal T2 dans le réseau étendu WAN2,
- un identifiant ID_PTwan_EA2 du port de la passerelle EA2 du terminal T2 dans le réseau étendu WAN2.

Au cours d'une sous-étape E342 représentée à la **figure 6****,** le module COM20 du terminal T2 reçoit le premier segment SG1 en provenance du serveur SERV3, via le réseau étendu WAN2.

Au cours d'une sous-étape E343 représentée à la **figure 6****,** le module COM21 du terminal T2 renvoie le segment SG1 à destination du terminal T1, via le réseau local LAN1, en réponse à la requête RL_SG1_CONT en téléchargement du premier segment SG1 qui a été reçue lors de la sous-étape E340 précitée.

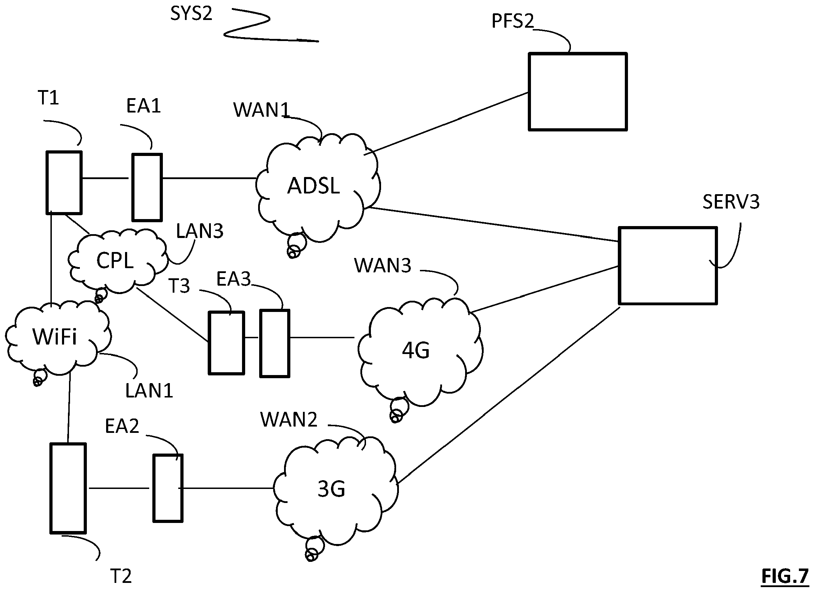

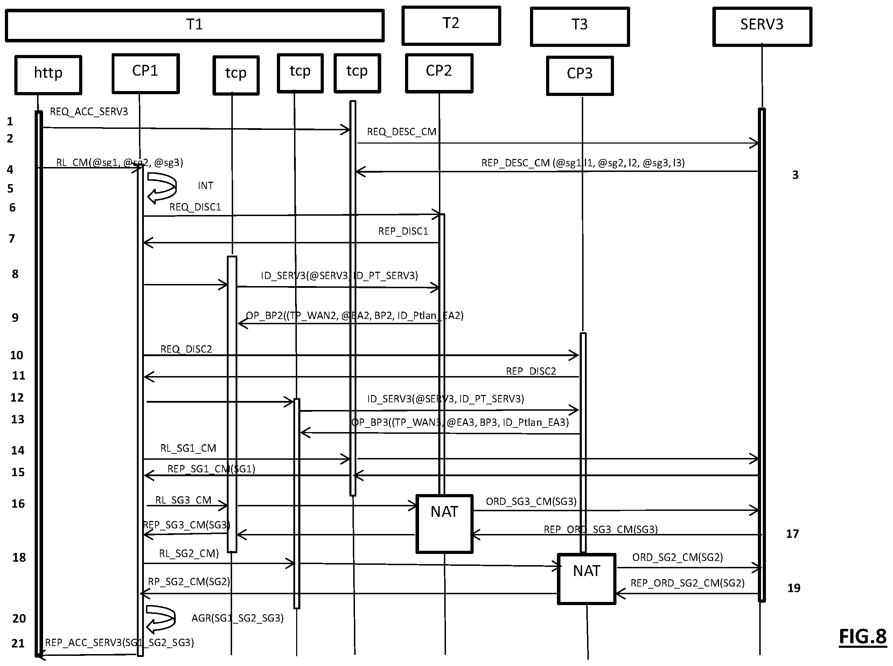

En référence aux **figures 7** et **8****,** on présente un exemple de cas d'usage de l'invention.

En relation avec la **figure 7****,** on présente une architecture SYS2 qui est similaire à l'architecture SYS1 de la **figure 1** et qui se distingue de cette dernière par la présence d'un troisième terminal T3 auquel le terminal T1 est connecté, via un réseau de télécommunications local LAN2, par exemple de type CPL. Le terminal T3 est quant à lui adapté pour communiquer avec le serveur SERV3 via un troisième réseau de télécommunications étendu WAN3, tel que par exemple de type IP. Dans l'exemple représenté, le réseau WAN3 est de type mobile et plus particulièrement 4G. Le terminal T3 est connecté au réseau WAN3 au moyen d'un équipement d'accès EA3, tel que par exemple une passerelle domestique ou d'entreprise.

Le terminal T3 présente exactement la même structure que le terminal T2. Pour cette raison, il ne sera pas décrit plus avant.

En relation avec la **figure 8****,** le cas d'usage selon l'invention est le téléchargement, dans le terminal T1 de la **figure 7****,** d'un contenu multimédia CM diffusé en direct de type séparable, c'est-à-dire préparé pour être séparable en plusieurs segments disponibles simultanément sur plusieurs adresses multicast.

Il s'agit par exemple d'un flux codé de façon hiérarchisée, par exemple selon un format échelonnable (« scalable », en anglais), de type MPEG-4 SVC, comprenant une première couche de données dite couche de base et au moins une deuxième couche de données dite couche de rehaussement. La première couche peut avantageusement être diffusée depuis une première adresse multicast, la ou les couches de rehaussement étant diffusées sur d'autres adresses multicast.

Une autre façon connue de rendre un flux séparable est de séparer les sous-flux qui le constituent, par exemple diffuser le sous-flux vidéo sur une première adresse multicast et le sous-flux audio et/ou les sous-flux de sous-titres sur une deuxième adresse multicast.

Encore une autre manière de rendre un flux séparable est d'utiliser une technique de partitionnement de données (pour « data partitioning », en anglais) pour répartir les données codées entre plusieurs sources de diffusion multicast.

Selon le cas d'usage représenté, il est supposé que le terminal T2 et le terminal T3 sont dans la capacité de partager avec le terminal T1 leur réseau de télécommunications étendu respectif.

En 1, le terminal T1 envoie une requête REQ_ACC_SERV3 d'accès au serveur SERV3. La requête REQ_ACC_SERV3 est une requête classique http qui contient l'adresse @SERV3 du serveur SERV3 et l'identifiant ID_PT_SERV3 du port du serveur SERV3.

En 2, la partie applicative de la surcouche protocolaire entre http et tcp du terminal T1 requiert alors l'établissement d'une première session de communication selon le protocole TCP pour dialoguer avec le serveur SERV3. Lors de cette communication, le terminal T1 émet classiquement une requête REQ_DESC_CM d'informations de description du contenu CM séparable auprès du serveur SERV3. On suppose que le contenu CM est séparable en trois segments SG1, SG2 et SG3, chacun étant disponible à une adresse multicast différente.

En 3, serveur SERV3 envoie une réponse REP_DESC_CM au terminal T1 qui contient plusieurs URL @sg1, @sg2 et @sg3 d'accès au contenu CM, correspondant aux différentes adresses de sources multicast @sg1, @sg2 et @sg3 des différents segments SG1, SG2 et SG3 du contenu CM et des informations relatives à une largeur I1, I2, I3 de bande passante descendante nécessaire pour recevoir chacun de ces segments.

En 4, le terminal T1 émet une requête http RL_CM en téléchargement du contenu CM, en utilisant la session TCP ouverte. La requête RL_CM contient les différentes adresses de sources multicast @sg1, @sg2 et @sg3 précitées.

EN 5, conformément à l'invention, la requête RL_CM est interceptée par la nouvelle couche protocolaire CP1 du terminal T1. La couche CP1 détermine alors que la requête RL_CONT peut être subdivisée en plusieurs requêtes indépendantes d'accès aux segments SG1, SG2 et SG3 du contenu CM.

En 6, conformément à l'invention, la couche CP1 du terminal T1 envoie une requête REQ_DISC1 en découverte de terminaux connectés au réseau local LAN1 de la **figure 7****.**

En 7, la couche CP1 du terminal T1 reçoit une réponse REP_DISC1 indiquant que le terminal T2 est connecté au réseau local LAN1.

En 8, conformément à l'invention, la couche CP1 requiert alors l'établissement d'une deuxième session de communication selon le protocole TCP pour dialoguer avec le terminal T2. Lors de cette deuxième session de communication, le terminal T1 émet à destination du terminal T2, via le réseau local LAN1, un message ID_SERV3 qui contient l'adresse @SERV3 du serveur SERV3 et l'identifiant ID_PT_SERV3 du port du serveur SERV3.

En 9, le terminal T1 obtient en réponse du terminal T2, via le réseau LAN1, un message OF_BP2 d'offre de partage du réseau de télécommunications étendu WAN2 auquel est connecté le terminal T2. Le message OF_BP2 contient notamment :
- le type TP_WAN2 auquel appartient le réseau étendu WAN2, « 3G » dans l'exemple représenté à la **figure 7****,**
- l'adresse IP @EA2 de la passerelle EA2 du terminal T2 dans le réseau étendu WAN2,
- la bande passante BP2 offerte par le terminal T2, c'est-à-dire la capacité de bande passante descendante disponible sur la ligne de la passerelle EA2,
- un identifiant ID_PTIan_EA2 du port de la passerelle EA2 du terminal T2 dans le réseau local LAN1.

En 10, conformément à l'invention, la couche CP1 du terminal T1 envoie une requête REQ_DISC2 en découverte de terminaux connectés au réseau local LAN2 de la **figure 7****.**

En 11, la couche CP1 du terminal T1 reçoit une réponse REP_DISC2 indiquant que le terminal T3 est connecté au réseau local LAN2.

En 12, conformément à l'invention, la couche CP1 requiert alors l'établissement d'une troisième session de communication selon le protocole TCP pour dialoguer avec le terminal T3. Lors de cette troisième session de communication, le terminal T1 émet à destination du terminal T3, via le réseau local LAN2, un message ID_SERV3 qui contient l'adresse @SERV3 du serveur SERV3 et l'identifiant ID_PT_SERV3 du port du serveur SERV3.

En 13, le terminal T1 obtient en réponse du terminal T3, via le réseau LAN2, un message OF_BP3 d'offre de partage du réseau de télécommunications étendu WAN3 auquel est connecté le terminal T3. Le message OF_BP3 contient notamment :
- le type TP_WAN3 auquel appartient le réseau étendu WAN3, « 4G » dans l'exemple représenté à la **figure 7****,**
- l'adresse IP @EA3 de la passerelle EA3 du terminal T3 dans le réseau étendu WAN3,
- la bande passante BP3 offerte par le terminal T3, c'est-à-dire la capacité de bande passante descendante disponible sur la ligne de la passerelle EA3,
- un identifiant ID_PTlan_EA3 du port de la passerelle EA3 du terminal T3 dans le réseau local LAN2.

Conformément à l'invention, la couche CP1 du terminal T1 détermine alors quels segments du contenu CM le terminal T1 va commander auprès des terminaux T2 et T3.

Dans l'exemple représenté, la couche CP1 détermine que le terminal T1 :
- requiert directement auprès du serveur SERV3 le premier segment SG1,
- requiert le deuxième segment SG2 auprès du troisième terminal T3,
- requiert le troisième segment SG3 auprès du deuxième terminal T2.

En 14, la couche CP1 du terminal T1 envoie au serveur SERV3 une requête classique http RL_SG1_CM en téléchargement du segment SG1 selon le protocole TCP utilisé pour la première session de communication précitée, ladite requête contenant l'adresse @sg1 associée au segment SG1.

En 15, la couche CP1 du terminal T1 reçoit en provenance du serveur SERV3 une réponse REP_SG1_CM qui contient le segment SG1.

En 16, conformément à l'invention, la couche CP1 du terminal T1 envoie au terminal T2 une requête http RL_SG3_CM en téléchargement du segment SG3, selon le protocole TCP utilisé pour la première session de communication précitée. La requête RL_SG3_CM contient :
- l'adresse @sg3 associée au segment SG3,
- l'adresse IP @EA1_LAN1 de la passerelle EA1 du terminal T1 dans le réseau local LAN1,

- un identifiant ID_Ptlan1_EA1 du port de la passerelle EA1 du terminal T1 dans le réseau local LAN1,
- l'adresse IP @EA2_LAN de la passerelle EA2 du terminal T2 dans le réseau local LAN1,
- l'identifiant ID_Ptlan_EA2 du port de la passerelle EA2 du terminal T2 dans le réseau local LAN1.

Le terminal T2 route alors la requête RL_SG3_CM à destination du serveur SERV3 en effectuant une translation d'adresses NAT. A cet effet, le terminal T2 envoie au serveur SERV3 une requête ORD_SG3_CM en téléchargement du segment SG3, laquelle contient :
- l'adresse @sg3 associée au segment SG3,
- l'adresse IP @EA2 de la passerelle EA2 du terminal T2 dans le réseau étendu WAN2,
- un identifiant ID_Ptwan_EA2 du port de la passerelle EA2 du terminal T2 dans le réseau étendu WAN2,
- l'adresse IP @SERV3 du serveur SERV3,
- l'identifiant ID_PT_SERV3 du port du serveur SERV3.

En 17, conformément à l'invention, le serveur SERV3 envoie en réponse au terminal T2 une réponse REP_ORD_SG3_CM qui contient :
- le segment SG3,
- l'adresse IP @SERV3 du serveur SERV3,
- l'identifiant ID_PT_SERV3 du port du serveur SERV3,
- l'adresse IP @EA2 de la passerelle EA2 du terminal T2 dans le réseau étendu WAN2,
- l'identifiant lD_Ptwan_EA2 du port de la passerelle EA2 du terminal T2 dans le réseau étendu WAN2.

Le terminal T2 route alors la réponse REP_ORD_SG3_CM à destination de la couche CP1 du terminal T1 en effectuant une translation d'adresses NAT. A cet effet, le terminal T2 envoie au terminal T1 une réponse REP_SG3_CM qui contient :
- le segment SG3,
- l'adresse IP @EA2_LAN de la passerelle EA2 du terminal T2 dans le réseau local LAN1,
- l'identifiant ID_Ptlan_EA2 du port de la passerelle EA2 du terminal T2 dans le réseau local LAN1,
- l'adresse IP @EA1_LAN1 de la passerelle EA1 du terminal T1 dans le réseau local LAN1,
- l'identifiant ID_Ptlan1_EA1 du port de la passerelle EA1 du terminal T1 dans le réseau local LAN1.

En 18, conformément à l'invention, la couche CP1 du terminal T1 envoie au terminal T3 une requête http RL_SG2_CM en téléchargement du segment SG2, selon le protocole TCP utilisé pour la troisième session de communication précitée. La requête RL_SG2_CM contient :
- l'adresse @sg2 associée au segment SG2,
- l'adresse IP @EA1_LAN2 de la passerelle EA1 du terminal T1 dans le réseau local LAN2,
- un identifiant ID_Ptlan2_EA1 du port de la passerelle EA1 du terminal T1 dans le réseau local LAN2,
- l'adresse IP @EA3_LAN de la passerelle EA3 du terminal T3 dans le réseau local LAN2,
- l'identifiant ID_Ptlan_EA3 du port de la passerelle EA3 du terminal T3 dans le réseau local LAN2.

Le terminal T3 route alors la requête RL_SG2_CM à destination du serveur SERV3 en effectuant une translation d'adresses NAT. A cet effet, le terminal T3 envoie au serveur SERV3 une requête ORD_SG2_CM en téléchargement du segment SG2, laquelle contient :
- l'adresse @sg2 associée au segment SG2,
- l'adresse IP @EA3 de la passerelle EA3 du terminal T3 dans le réseau étendu WAN3,
- un identifiant ID_Ptwan_EA3 du port de la passerelle EA3 du terminal T3 dans le réseau étendu WAN3,
- l'adresse IP @SERV3 du serveur SERV3,
- l'identifiant ID_PT_SERV3 du port du serveur SERV3.

En 19, conformément à l'invention, le serveur SERV3 envoie au terminal T3 une réponse REP_ORD_SG2_CM qui contient :
- le segment SG2,
- l'adresse IP @SERV3 du serveur SERV3,
- l'identifiant ID_PT_SERV3 du port du serveur SERV3,
- l'adresse IP @EA3 de la passerelle EA3 du terminal T3 dans le réseau étendu WAN3,
- l'identifiant ID_Ptwan_EA3 du port de la passerelle EA3 du terminal T3 dans le réseau étendu WAN3.

Le terminal T3 route alors la réponse REP_ORD_SG2_CM à destination de la couche CP1 du terminal T1 en effectuant une translation d'adresses NAT. A cet effet, le terminal T3 envoie au terminal T1 une réponse REP_SG2_CM qui contient :
- le segment SG2,
- l'adresse IP @EA3_LAN de la passerelle EA3 du terminal T3 dans le réseau local LAN2,
- l'identifiant ID_Ptlan_EA3 du port de la passerelle EA3 du terminal T3 dans le réseau local LAN2,
- l'adresse IP @EA1_LAN2 de la passerelle EA1 du terminal T1 dans le réseau local LAN2,
- l'identifiant ID_Ptlan2_EA1 du port de la passerelle EA1 du terminal T1 dans le réseau local LAN2.

Dans l'exemple représenté, l'ensemble des étapes 14, 15, l'ensemble des étapes 16, 17 et l'ensemble des étapes 18, 19 sont mis en oeuvre en parallèle.

En variante, l'ensemble des étapes 14, 15, l'ensemble des étapes 16, 17 et l'ensemble des étapes 18, 19 sont mis en oeuvre successivement selon un ordre quelconque.

En 20, conformément à l'invention, la couche CP1 agrège les trois segments SG1, SG2, SG3 reçus selon un ordre préétabli qui est par exemple l'ordre d'apparition des segments dans le contenu CM : SG1, SG2, SG3.

En 21, conformément à l'invention, la couche CP1 du terminal T1 envoie à la partie applicative de la surcouche protocolaire entre http et tcp du terminal T1 qui a émis, en 1, la requête http initiale REQ_ACC_SERV3, une réponse REP_ACC_SERV3 qui contient les segments agrégés SG1_SG2_SG3 du contenu CM requis.

L'invention permet ainsi de mutualiser les largeurs de bande passante dont bénéficient plusieurs abonnés voisins pour faciliter l'accès à des contenus numériques segmentables disponibles sur le réseau internet.

L'invention est particulièrement avantageuse en ce sens qu'elle n'implique aucune modification particulière du serveur SERV3 et de l'infrastructure des réseaux locaux LAN1, LAN2 et étendus WAN1, WAN2 et WAN3.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Procédé de téléchargement de contenu dans un premier terminal à partir d'un serveur, via un premier réseau de télécommunications étendu, comprenant une étape (E10) d'établissement d'une première communication à partir du premier terminal, selon un protocole de communication prédéterminé, au cours de laquelle le premier terminal émet une requête en téléchargement d'un contenu à destination dudit serveur, via ledit premier réseau de télécommunications étendu,
ledit procédé étant **caractérisé en ce qu'**il comprend, au niveau du premier terminal, les étapes suivantes :
- interception (E12) de ladite requête en téléchargement de contenu,
- découverte (E13) d'au moins un deuxième terminal connecté au premier terminal via un réseau de télécommunications local, le deuxième terminal étant en outre connecté à un deuxième réseau de télécommunications étendu, au cours de laquelle le premier terminal:
• envoie (E15) au deuxième terminal un message qui contient des informations d'identification du serveur,
• reçoit (E16) en provenance du deuxième terminal un message (OF_BP2) d'offre de partage du deuxième réseau de télécommunications étendu, en vue dudit téléchargement de contenu, le message d'offre de partage contenant un identifiant de port associé au deuxième terminal,
- détermination (E17) d'au moins un premier segment de données du contenu à télécharger en fonction de l'offre de partage contenue dans le message reçu,
- établissement (E18) d'une deuxième communication à partir du premier terminal, selon ledit protocole de communication prédéterminé, au cours de laquelle le premier terminal, via ledit réseau de télécommunications local :
• émet (E180) à destination du port associé au deuxième terminal une requête en téléchargement du premier segment de contenu déterminé,
• reçoit (E181) en provenance du deuxième terminal le premier segment de contenu qui a été obtenu préalablement par le deuxième terminal suite à une connexion par ce dernier audit serveur, via le deuxième réseau de télécommunications étendu, au moyen des informations d'identification du serveur envoyées par le premier terminal lors de l'étape de découverte.

2. Procédé de téléchargement selon la revendication 1, au cours duquel le message (OF_BP2) d'offre de partage reçu lors de l'étape de découverte contient en outre :
- le type auquel appartient le deuxième réseau de télécommunications étendu,
- l'adresse d'un équipement d'accès du deuxième terminal au deuxième réseau de télécommunications étendu,
- la bande passante offerte par le deuxième terminal.

3. Procédé de téléchargement selon la revendication 1 ou la revendication 2, au cours duquel l'étape (E12) d'interception de la requête en téléchargement consiste à :
- déterminer (E120) si le contenu à télécharger est décomposable en au moins un premier segment de données,
- dans le cas d'une réponse positive, émettre une requête en découverte d'un ou plusieurs terminaux connectés au premier terminal via le réseau de télécommunications local,
- dans le cas d'une réponse négative :
• poursuivre (E20) l'émission de la requête en téléchargement de contenu à destination dudit serveur,
• recevoir (E21) le contenu en provenance du serveur.

4. Procédé de téléchargement selon l'une quelconque des revendications 1 à 3, au cours duquel dans le cas où le premier terminal détermine que le contenu à télécharger comprend un deuxième segment de données et que la bande passante du premier terminal est suffisante pour permettre le téléchargement du deuxième segment directement en provenance du serveur, il est procédé aux étapes suivantes :
- établissement (E20') d'une troisième communication à partir du premier terminal, selon ledit protocole de communication prédéterminé, au cours de laquelle le premier terminal, via ledit premier réseau de télécommunications étendu :
• émet (E201') à destination du serveur une requête en téléchargement du deuxième segment de contenu,
• reçoit (E202') le deuxième segment de contenu en provenance du serveur.

5. Procédé de téléchargement selon la revendication 4, au cours duquel, à la suite de la réception des premier et deuxième segments, il est procédé, au niveau du premier terminal, aux étapes suivantes :
- agrégation (E22') des premier et deuxième segments selon un ordre prédéterminé,
- réception (E23') des premier et deuxième segments agrégés en réponse à ladite requête en téléchargement d'un contenu émise au cours de ladite première communication établie par le premier terminal.

6. Procédé de téléchargement selon l'une quelconque des revendications 1 à 4, comprenant en outre les étapes suivantes :
- découverte d'au moins un troisième terminal connecté au premier terminal via ledit réseau de télécommunications local, le troisième terminal étant en outre connecté à un troisième réseau de télécommunications étendu, au cours de laquelle le premier terminal:
• envoie au troisième terminal un message qui contient des informations d'identification du serveur,
• reçoit en provenance du troisième terminal un message d'offre de partage du troisième réseau de communication étendu, en vue dudit téléchargement de contenu, le message contenant un identifiant de port associé au troisième terminal,
- détermination d'au moins un troisième segment de données du contenu à télécharger en fonction de l'offre de partage contenue dans le message reçu,
- établissement d'une quatrième communication à partir du premier terminal, selon ledit protocole de communication prédéterminé, au cours de laquelle le premier terminal, via ledit réseau de télécommunications local :
• émet à destination du port associé au troisième terminal une requête en téléchargement du troisième segment de contenu déterminé,
• reçoit en provenance du troisième terminal le troisième segment de contenu qui a été obtenu préalablement par le troisième terminal suite à une connexion par ce dernier audit serveur, via le troisième réseau de télécommunications étendu, au moyen des informations d'identification du serveur envoyées par le premier terminal lors de l'étape de découverte.

7. Procédé de téléchargement selon la revendication 6, au cours duquel à la suite de la réception soit des premier et troisième segments, soit des premier, deuxième et troisième segments, il est procédé, au niveau du premier terminal aux étapes suivantes :
- agrégation selon un ordre prédéterminé des premier, deuxième et troisième segments,
- réception des premier, deuxième et troisième segments agrégés, en réponse à ladite requête en téléchargement d'un contenu émise au cours de ladite première communication établie par le premier terminal.

8. Terminal (T1) apte à télécharger un contenu à partir d'un serveur, via un premier réseau de télécommunications étendu, comprenant des moyens (COM10) d'établissement d'une première communication selon un protocole de communication prédéterminé qui sont aptes à émettre une requête en téléchargement d'un contenu à destination dudit serveur, via ledit premier réseau de télécommunications étendu,
ledit terminal étant **caractérisé en ce qu'**il comprend :
- des moyens (ICN1) d'interception aptes à intercepter la requête en téléchargement de contenu,
- des moyens (DISC1) de découverte d'au moins un deuxième terminal connecté d'une part au premier terminal via un réseau de télécommunications local, et, d'autre part, à un deuxième réseau de télécommunications étendu, lesdits moyens de découverte étant adaptés pour :
• envoyer au deuxième terminal un message qui contient des informations d'identification du serveur,
• recevoir en provenance du deuxième terminal un message d'offre de partage du deuxième réseau de télécommunications étendu, en vue dudit téléchargement de contenu, le message d'offre de partage contenant un identifiant de port associé au deuxième terminal,
- des moyens (DET1) de détermination aptes à déterminer au moins un premier segment de données du contenu à télécharger en fonction de l'offre de partage contenue dans le message reçu,
- des moyens (COM11) d'établissement d'une deuxième communication à partir du premier terminal, selon ledit protocole de communication prédéterminé, lesquels sont adaptés pour, via le réseau de télécommunications local :
• émettre à destination du port associé au deuxième terminal une requête en téléchargement du premier segment de contenu déterminé,
• recevoir en provenance du deuxième terminal le premier segment de contenu qui a été obtenu préalablement par le deuxième terminal suite à une connexion par ce dernier audit serveur, via le deuxième réseau de télécommunications étendu, au moyen des informations d'identification du serveur envoyées par les moyens de découverte.

9. Programme d'ordinateur comportant des instructions de code de programme pour l'exécution des étapes du procédé de téléchargement selon l'une quelconque des revendications 1 à 7, lorsque ledit programme est exécuté sur un ordinateur.

10. Procédé de mise à disposition d'un premier terminal, connecté à un premier réseau de télécommunications étendu, d'un deuxième réseau de télécommunications étendu auquel est connecté un deuxième terminal, en vue du téléchargement d'un contenu dans le premier terminal à partir d'un serveur, ledit procédé étant **caractérisé en ce qu'**il comprend, au niveau du deuxième terminal, les étapes suivantes :
- découverte (E30-E31) d'une connexion du deuxième terminal au premier terminal via un réseau de télécommunications local, au cours de laquelle le deuxième terminal :
• reçoit (E32), en provenance du premier terminal, un message contenant des informations d'identification du serveur,
• émet (E33) à destination du premier terminal une réponse audit message qui contient une offre de partage du deuxième réseau de télécommunications étendu en vue dudit téléchargement de contenu, ladite réponse contenant un identifiant de port associé au deuxième terminal,
- établissement (E34) d'une communication entre les premier et deuxième terminaux, au cours de laquelle le deuxième terminal :
• reçoit (E340) sur ledit port, en provenance du premier terminal, via ledit réseau de télécommunications local, une requête en téléchargement d'un premier segment de contenu déterminé au préalable par le premier terminal à partir de l'offre de partage,
• à partir des informations d'identification du serveur reçues, route (E341) à destination du serveur, via le deuxième réseau de télécommunications étendu, la requête en téléchargement du premier segment reçue,
• reçoit (E342) en réponse le premier segment de contenu en provenance du serveur, via le deuxième réseau de télécommunications étendu,
• émet (E343) le premier segment de contenu reçu à destination du premier terminal, via le réseau de télécommunications local.

11. Procédé de mise à disposition selon la revendication 10, au cours duquel la réponse (OP_BP2) contenant l'offre de partage du deuxième réseau de télécommunications étendu contient en outre :
- le type auquel appartient le deuxième réseau de télécommunications étendu,
- l'adresse d'un équipement d'accès du deuxième terminal au deuxième réseau de télécommunications étendu,
- la bande passante offerte par le deuxième terminal.

12. Terminal (T2) apte à mettre à disposition d'un autre terminal connecté à un premier réseau de télécommunications étendu, un deuxième réseau de télécommunications étendu auquel est connecté ledit terminal, en vue du téléchargement d'un contenu dans ledit autre terminal à partir d'un serveur, ledit terminal étant **caractérisé en ce qu'**il comprend :
- des moyens (DISC2) de découverte d'une connexion du terminal à l'autre terminal, via un réseau de télécommunications local, les moyens de découverte étant adaptés pour :
• recevoir, en provenance de l'autre terminal, une requête en découverte d'au moins un terminal connecté à l'autre terminal via un réseau de télécommunications local, ladite requête contenant des informations d'identification du serveur,
• émettre à destination de l'autre terminal, via le réseau de télécommunications local, une réponse à ladite requête qui contient une offre de partage du deuxième réseau de télécommunications étendu, en vue dudit téléchargement de contenu, la réponse contenant un identifiant de port associé audit terminal,
- des moyens (COM21) d'établissement d'une communication entre les deux terminaux, lesdits moyens d'établissement de communication étant adaptés pour :
• recevoir sur le port du terminal, en provenance de l'autre terminal, via le réseau de télécommunications local, une requête en téléchargement d'un premier segment de contenu déterminé au préalable par l'autre terminal à partir de l'offre de partage,
• à partir des informations d'identification du serveur reçues, router à destination du serveur, via le deuxième réseau de télécommunications étendu, la requête en téléchargement du premier segment reçue,
• recevoir en réponse le premier segment de contenu en provenance du serveur, via le deuxième réseau de télécommunications étendu,
• émettre le premier segment de contenu reçu à destination de l'autre terminal, via le réseau de télécommunications local.

13. Programme d'ordinateur comportant des instructions de code de programme pour l'exécution des étapes du procédé de mise à disposition selon la revendication 10 ou la revendication 11, lorsque ledit programme est exécuté sur un ordinateur.

## Patentansprüche

1. Verfahren zum Herunterladen von Inhalt in ein erstes Endgerät von einem Server aus über ein erstes Weitverkehrstelekommunikationsnetz, umfassend einen Schritt (E10) des Aufbauens einer ersten Verbindung von dem ersten Endgerät aus gemäß einem vorbestimmten Kommunikationsprotokoll, während der das erste Endgerät eine Herunterladeanforderung für einen Inhalt über das erste Weitverkehrskommunikationsnetz an den Server sendet,
wobei das Verfahren **dadurch gekennzeichnet ist, dass** es auf Ebene des ersten Endgeräts die folgenden Schritte umfasst:
- Abfangen (E12) der Inhalt-Herunterladeanforderung,
- Entdecken (E13) mindestens eines zweiten Endgeräts, das mit dem ersten Endgerät über ein lokales Telekommunikationsnetz verbunden ist, wobei das zweite Endgerät ferner mit einem zweiten Weitverkehrstelekommunikationsnetz verbunden ist, während dessen das erste Endgerät:
• an das zweite Endgerät eine Nachricht sendet (E15), die Informationen zur Identifizierung des Servers enthält,
• von dem zweiten Endgerät eine Nachricht (OF_BP2) mit dem Angebot des Teilens des zweiten Weitverkehrstelekommunikationsnetz im Hinblick auf das Herunterladen von Inhalt empfängt (E16), wobei die Nachricht mit dem Angebot des Teilens eine dem zweiten Endgerät zugewiesene Portkennung enthält,
- Bestimmen (E17) mindestens eines ersten Datensegments des herunterzuladenden Inhalts in Abhängigkeit von dem in der empfangenen Nachricht enthaltenen Angebot des Teilens,
- Aufbauen (E18) einer zweiten Verbindung von dem ersten Endgerät aus gemäß dem vorbestimmten Kommunikationsprotokoll, während der das erste Endgerät über das lokale Telekommunikationsnetz:
• an den dem zweiten Endgerät zugewiesenen Port eine Herunterladeanforderung für das bestimmte erste Inhaltssegments sendet (E180),
• vom zweiten Endgerät das erste Inhaltssegment empfängt (E181), das zuvor vom zweiten Endgerät nach dessen Verbindung mit dem Server über das zweite Weitverkehrstelekommunikationsnetz mittels der Informationen zur Identifizierung des Servers, die vom ersten Endgerät beim Entdeckungsschritt gesendet wurden, empfangen worden ist.

2. Herunterladeverfahren nach Anspruch 1, während dessen die beim Entdeckungsschritt empfangene Nachricht (OF_BP2) mit dem Angebot des Teilens ferner enthält:
- den Typ, dem das zweite Weitverkehrstelekommunikationsnetz angehört,
- die Adresse einer Zugangseinrichtung des zweiten Endgeräts zu dem zweiten Weitverkehrskommunikationsnetz,
- die vom zweiten Endgerät angebotene Bandbreite.

3. Herunterladeverfahren nach Anspruch 1 oder Anspruch 2, während dessen der Schritt des Abfangens (E12) der Herunterladeanforderung in Folgendem besteht:
- Bestimmen (E120), ob der herunterzuladende Inhalt in mindestens ein erstes Datensegment zerlegbar ist,
- im Fall einer positiven Antwort, Senden einer Anforderung des Entdeckens eines oder mehrerer Endgeräte, die mit dem ersten Endgerät über das lokale Telekommunikationsnetz verbunden sind,
- im Fall einer negativen Antwort:
• Fortsetzen (E20) des Sendens der Inhalt-Herunterladeanforderung an den Server,
• Empfangen (E21) des Inhalts von dem Server.

4. Herunterladeverfahren nach einem der Ansprüche 1 bis 3, während dessen in dem Fall, in dem das erste Endgerät bestimmt, dass der herunterzuladende Inhalt ein zweites Datensegment umfasst und dass die Bandbreite des ersten Endgeräts ausreicht, um das Herunterladen das zweiten Segments direkt vom Server zu ermöglichen, die folgenden Schritte ausgeführt werden:
- Aufbauen (E20') einer dritten Verbindung von dem ersten Endgerät aus gemäß dem vorbestimmten Kommunikationsprotokoll, während der das erste Endgerät über das erste Weitverkehrstelekommunikationsnetz:
• an den Server eine Herunterladeanforderung für das zweite Inhaltssegment sendet (E201'),
• vom Server das zweite Inhaltssegment empfängt (E202').

5. Herunterladeverfahren nach Anspruch 4, während dessen, nach dem Empfangen der ersten und zweiten Segmente, auf Ebene des ersten Endgeräts die folgenden Schritte ausgeführt werden:
- Aggregation (E22') der ersten und zweiten Segmente in einer vorbestimmten Reihenfolge,
- Empfangen (E23') der aggregierten ersten und zweiten Segmente als Antwort auf die Herunterladeanforderung für einen Inhalt, die während der vom ersten Endgerät aufgebauten ersten Verbindung gesendet wurde.

6. Herunterladeverfahren nach einem der Ansprüche 1 bis 4, umfassend ferner die folgenden Schritte:
- Entdecken mindestens eines dritten Endgeräts, das mit dem ersten Endgerät über das lokale Telekommunikationsnetz verbunden ist, wobei das dritte Endgerät ferner mit einem dritten Weitverkehrstelekommunikationsnetz verbunden ist, während dessen das erste Endgerät:
• an das dritte Endgerät eine Nachricht sendet, die Informationen zur Identifizierung des Servers enthält,
• vom dritten Endgerät eine Nachricht mit dem Angebot des Teilens des dritten Weitverkehrstelekommunikationsnetzes im Hinblick auf das Herunterladen von Inhalt empfängt, wobei die Nachricht eine dem dritten Endgerät zugewiesene Portkennung enthält,
- Bestimmen mindestens eines dritten Datensegments des herunterzuladenden Inhalts in Abhängigkeit von dem in der empfangenen Nachricht enthaltenen Angebot des Teilens,
- Aufbauen einer vierten Verbindung von dem ersten Endgerät aus gemäß dem vorbestimmten Kommunikationsprotokoll, während der das erste Endgerät über das lokale Telekommunikationsnetz:
• an den dem dritten Endgerät zugewiesenen Port eine Herunterladeanforderung für das bestimmte dritte Inhaltssegment sendet,
• vom dritten Endgerät das dritte Inhaltssegment empfängt, das zuvor vom dritten Endgerät nach dessen Verbindung mit dem Server über das dritte Weitverkehrstelekommunikationsnetz mittels der Informationen zur Identifizierung des Servers, die vom ersten Endgerät beim Entdeckungsschritt gesendet wurden, empfangen worden ist.

7. Herunterladeverfahren nach Anspruch 6, während dessen nach dem Empfangen entweder der ersten und dritten Segmente oder der ersten, zweiten und dritten Segmente auf Ebene des ersten Endgeräts die folgenden Schritte ausgeführt werden:
- Aggregation der ersten, zweiten und dritten Segmente in einer vorbestimmten Reihenfolge,
- Empfangen der aggregierten ersten, zweiten und dritten Segmente als Antwort auf die Herunterladeanforderung für einen Inhalt, die während der vom ersten Endgerät aufgebauten ersten Verbindung gesendet wurde.

8. Endgerät (T1), das geeignet ist, einen Inhalt von einem Server aus über ein erstes Weitverkehrstelekommunikationsnetz herunterzuladen, umfassend Einrichtungen (COM10) zum Aufbauen einer ersten Verbindung gemäß einem vorbestimmten Kommunikationsprotokoll, die geeignet sind, eine Herunterladeanforderung für einen Inhalt über das erste Weitverkehrstelekommunikationsnetz an den Server zu senden,
wobei das Endgerät **dadurch gekennzeichnet ist, dass** es umfasst:
- Abfangeinrichtungen (ICN1), die geeignet sind, die Inhalt-Herunterladeanforderung abzufangen,
- Entdeckungseinrichtungen (DISC1) zum Entdecken mindestens eines zweiten Endgeräts, das zum einen mit dem ersten Endgerät über ein lokales Telekommunikationsnetz und zum anderen mit einem zweiten Weitverkehrstelekommunikationsnetz verbunden ist, wobei die Entdeckungseinrichtungen geeignet sind:
• an das zweite Endgerät eine Nachricht zu senden, die Informationen zur Identifizierung des Servers enthält,
• vom zweiten Endgerät eine Nachricht mit dem Angebot des Teilens des zweiten Weitverkehrstelekommunikationsnetzes im Hinblick auf das Herunterladen von Inhalt zu empfangen, wobei die Nachricht mit dem Angebot des Teilens eine dem zweiten Endgerät zugewiesene Portkennung enthält,
- Bestimmungseinrichtungen (DET1), die geeignet sind, mindestens ein erstes Datensegment des herunterzuladenden Inhalts in Abhängigkeit von dem in der empfangenen Nachricht enthaltenen Angebot des Teilens zu bestimmen,
- Einrichtungen (COM11) zum Aufbauen einer zweiten Verbindung von dem ersten Endgerät aus gemäß dem vorbestimmten Kommunikationsprotokoll, die geeignet sind, über das lokale Telekommunikationsnetz:
• an den dem zweiten Endgerät zugewiesenen Port eine Herunterladeanforderung für das bestimmte erste Inhaltssegment zu senden,
• vom zweiten Endgerät das erste Inhaltssegment zu empfangen, das zuvor vom zweiten Endgerät nach dessen Verbindung mit dem Server über das zweite Weitverkehrstelekommunikationsnetz mittels der Informationen zur Identifizierung des Servers, die von den Entdeckungseinrichtungen gesendet wurden, empfangen worden ist.

9. Computerprogramm, das Programmcodeanweisungen umfasst, die bei der Ausführung des Programms auf einem Computer die Schritte des Herunterladeverfahrens nach einem der Ansprüche 1 bis 7 ausführen.

10. Verfahren zur Bereitstellung eines zweiten Weitverkehrstelekommunikationsnetzes, mit dem ein zweites Endgerät verbunden ist, für ein erstes Endgerät, das mit einem ersten Weitverkehrstelekommunikationsnetz verbunden ist, im Hinblick auf das Herunterladen eines Inhalts in das erste Endgerät von einem Server aus, wobei das Verfahren **dadurch gekennzeichnet ist, dass** es auf Ebene des zweiten Endgeräts die folgenden Schritte umfasst:
- Entdecken (E30-E31) einer Verbindung des zweiten Endgeräts mit dem ersten Endgerät über ein lokales Telekommunikationsnetzwerk, während der das zweite Endgerät:
• vom ersten Endgerät eine Nachricht empfängt (E32), die Informationen zur Identifizierung des Servers enthält,
• an das erste Endgerät eine Antwort auf die Nachricht sendet (E33), die ein Angebot des Teilens des zweiten Weitverkehrstelekommunikationsnetzes im Hinblick auf das Herunterladen von Inhalt enthält, wobei die Antwort eine dem zweiten Endgerät zugewiesene Portkennung enthält,
- Aufbauen (E34) einer Verbindung zwischen den ersten und zweiten Endgeräten, während der das zweite Endgerät:
• über den Port vom ersten Endgerät über das lokale Telekommunikationsnetz eine Herunterladeanforderung für ein erstes Inhaltssegment empfängt (E340), das zuvor vom ersten Endgerät anhand des Angebots des Teilens bestimmt wurde,
• anhand der empfangenen Informationen zur Identifizierung des Servers die empfangene Herunterladeanforderung für das erste Segment über das zweite Weitverkehrstelekommunikationsnetz an den Server leitet (E341),
• als Antwort das erste Inhaltssegment vom Server über das zweite Weitverkehrstelekommunikationsnetz empfängt (E342),
• das empfangene erste Inhaltssegment über das lokale Telekommunikationsnetz an das erste Endgerät sendet (E343).

11. Bereitstellungsverfahren nach Anspruch 10, während dessen die Antwort (OF_BP2), die das Angebot des Teilens des zweiten Weitverkehrstelekommunikationsnetzes enthält, ferner enthält:
- den Typ, dem das zweite Weitverkehrstelekommunikationsnetz angehört,
- die Adresse einer Zugangseinrichtung des zweiten Endgeräts zu dem zweiten Weitverkehrskommunikationsnetz,
- die vom zweiten Endgerät angebotene Bandbreite.

12. Endgerät (T2), das geeignet ist, einem anderen Endgerät, das mit einem ersten Weitverkehrstelekommunikationsnetz verbunden ist, ein zweites Weitverkehrstelekommunikationsnetz, mit dem das Endgerät verbunden ist, im Hinblick auf das Herunterladen eines Inhalts in das andere Endgerät von einem Server aus bereitzustellen, wobei das Endgerät **dadurch gekennzeichnet ist, dass** es umfasst:
- Entdeckungseinrichtungen (DISC2) zum Entdecken einer Verbindung des Endgeräts mit dem anderen Endgerät über ein lokales Telekommunikationsnetz, wobei die Entdeckungseinrichtungen geeignet sind:
• von dem anderen Endgerät eine Anforderung des Entdeckens mindestens eines Endgeräts zu empfangen, das mit dem anderen Endgerät über ein lokales Telekommunikationsnetz verbunden ist, wobei die Anforderung Informationen zur Identifizierung des Servers enthält,
• an das andere Endgerät über das lokale Telekommunikationsnetz eine Antwort auf die Anforderung zu senden, die ein Angebot des Teilens des zweiten Weitverkehrstelekommunikationsnetzes im Hinblick auf das Herunterladen von Inhalt enthält, wobei die Antwort eine dem zweiten Endgerät zugewiesene Portkennung enthält,
- Einrichtungen (COM21) zum Aufbauen einer Verbindung zwischen den beiden Endgeräten, wobei die Verbindungsaufbaueinrichtungen geeignet sind:
• über den Port des Endgeräts von dem anderen Endgerät über das lokale Telekommunikationsnetz eine Herunterladeanforderung für ein erstes Inhaltssegment zu empfangen, das zuvor von dem anderen Endgerät anhand des Angebots des Teilens bestimmt wurde,
• anhand der empfangenen Informationen zur Identifizierung des Servers die empfangene Herunterladeanforderung für das erste Segment über das zweite Weitverkehrstelekommunikationsnetz an den Server zu leiten,
• als Antwort das erste Inhaltssegment vom Server über das zweite Weitverkehrstelekommunikationsnetz zu empfangen,
• das empfangene erste Inhaltssegment über das lokale Telekommunikationsnetz an das andere Endgerät zu senden.

13. Computerprogramm, das Programmcodeanweisungen umfasst, die bei der Ausführung des Programms auf einem Computer die Schritte des Bereitstellungsverfahrens nach Anspruch 10 oder Anspruch 11 ausführen.

## Claims

1. Method for downloading content into a first terminal from a server, via a first wide area telecommunications network, comprising a step (E10) of setting up a first communication from the first terminal, according to a predetermined communication protocol, in the course of which the first terminal transmits a download request for a content to said server, via said first wide area telecommunications network,
said method being **characterized in that** it comprises, on the first terminal, the following steps:
- intercepting (E12) said content download request,
- discovering (E13) at least one second terminal connected to the first terminal via a local area telecommunications network, the second terminal being moreover connected to a second wide area telecommunications network, in the course of which the first terminal:
• sends (E15) to the second terminal a message that contains identification information for the server,
• receives (E16) from the second terminal a message (OF_BP2) offering to share the second wide area telecommunications network, for the purpose of said content download, the message offering to share containing a port identifier associated with the second terminal,
- determining (E17) at least one first data segment of the content to be downloaded on the basis of the offer to share contained in the received message,
- setting up (E18) a second communication from the first terminal, according to said predetermined communication protocol, in the course of which the first terminal, via said local area telecommunications network:
• transmits (E180) to the port associated with the second terminal a download request for the determined first content segment,
• receives (E181) from the second terminal the first content segment that has been obtained previously by the second terminal following a connection by the latter to said server, via the second wide area telecommunications network, by means of the identification information for the server that was sent by the first terminal in the discovery step.

2. Download method according to Claim 1, in the course of which the message (OF_BP2) offering to share received in the discovery step moreover contains:
- the type to which the second wide area telecommunications network belongs,
- the address of a device for the second terminal to access the second wide area telecommunications network,
- the bandwidth offered by the second terminal.

3. Download method according to Claim 1 or Claim 2, in the course of which the step (E12) of intercepting the download request consists in:
- determining (E120) whether the content to be downloaded can be broken down into at least one first data segment,
- in the event of the response being positive, transmitting a discovery request from one or more connected terminals to the first terminal via the local area telecommunications network,
- in the event of the response being negative:
• continuing (E20) transmission of the content download request to said server,
• receiving (E21) the content from the server.

4. Download method according to any one of Claims 1 to 3, in the course of which, in the event of the first terminal determining that the content to be downloaded comprises a second data segment and that the bandwidth of the first terminal is sufficient to allow download of the second segment directly from the server, the following steps are performed:
- setting up (E20') a third communication from the first terminal, according to said predetermined communication protocol, in the course of which the first terminal, via said first wide area telecommunications network:
• transmits (E201') to the server a download request for the second content segment,
• receives (E202') the second content segment from the server.

5. Download method according to Claim 4, in the course of which, following reception of the first and second segments, the following steps are performed, on the first terminal:
- aggregating (E22') the first and second segments in a predetermined order,
- receiving (E23') the aggregated first and second segments in response to said download request for a content, transmitted in the course of said first communication set up by the first terminal.

6. Download method according to any one of Claims 1 to 4, moreover comprising the following steps:
- discovering at least one third terminal connected to the first terminal via said local area telecommunications network, the third terminal being moreover connected to a third wide area telecommunications network, in the course of which the first terminal:
• sends to the third terminal a message that contains identification information for the server,
• receives from the third terminal a message offering to share the third wide area communication network, for the purpose of said content download, the message containing a port identifier associated with the third terminal,
- determining at least one third data segment of the content to be downloaded on the basis of the offer to share contained in the received message,
- setting up a fourth communication from the first terminal, according to said predetermined communication protocol, in the course of which the first terminal, via said local area telecommunications network:
• transmits to the port associated with the third terminal a download request for the determined third content segment,
• receives from the third terminal the third content segment, which has been obtained previously by the third terminal following a connection by the latter to said server, via the third wide area telecommunications network, by means of the identification information for the server that was sent by the first terminal in the discovery step.

7. Download method according to Claim 6, in the course of which, following reception either of the first and third segments or of the first, second and third segments, the following steps are performed, on the first terminal:
- aggregating the first, second and third segments in a predetermined order,
- receiving the aggregated first, second and third segments, in response to said download request for a content, transmitted in the course of said first communication set up by the first terminal.

8. Terminal (T1) capable of downloading a content from a server, via a first wide area telecommunications network, comprising means (COM10) for setting up a first communication according to a predetermined communication protocol that are capable of transmitting a download request for a content to said server, via said first wide area telecommunications network,
said terminal being **characterized in that** it comprises:
- interception means (ICN1) that are capable of intercepting the content download request,
- means (DISCI) for discovering at least one second terminal connected firstly to the first terminal via a local area telecommunications network and, secondly, to a second wide area telecommunications network, said discovery means being adapted to:
• send to the second terminal a message that contains identification information for the server,
• receive from the second terminal a message offering to share the second wide area telecommunications network, for the purpose of said content download, the message offering to share containing a port identifier associated with the second terminal,
- determination means (DET1) that are capable of determining at least one first data segment of the content to be downloaded on the basis of the offer to share contained in the received message,
- means (COM11) for setting up a second communication from the first terminal, according to said predetermined communication protocol, which are adapted to, via the local area telecommunications network:
• transmit to the port associated with the second terminal a download request for the determined first content segment,
• receive from the second terminal the first content segment that has been obtained previously by the second terminal following a connection by the latter to said server, via the second wide area telecommunications network, by means of the identification information for the server that was sent by the discovery means.

9. Computer program having program code instructions for executing the steps of the download method according to any one of Claims 1 to 7 when said program is executed on a computer.

10. Method for providing a first terminal, connected to a first wide area telecommunications network, with a second wide area telecommunications network to which a second terminal is connected, for the purpose of downloading a content into the first terminal from a server, said method being **characterized in that** it comprises, on the second terminal, the following steps:
- discovering (E30-E31) a connection from the second terminal to the first terminal via a local area telecommunications network, in the course of which the second terminal:
• receives (E32), from the first terminal, a message containing identification information for the server,
• transmits (E33) to the first terminal a response to said message that contains an offer to share the second wide area telecommunications network for the purpose of said content download, said response containing a port identifier associated with the second terminal,
- setting up (E34) a communication between the first and second terminals, in the course of which the second terminal:
• receives (E340) on said port, from the first terminal, via said local area telecommunications network, a download request for a first content segment determined beforehand by the first terminal from the offer to share,
• takes the received identification information for the server as a basis for routing (E341) to the server, via the second wide area telecommunications network, the received download request for the first segment,
• receives (E342) in response the first content segment from the server, via the second wide area telecommunications network,
• transmits (E343) the received first content segment to the first terminal, via the local area telecommunications network.

11. Provision method according to Claim 10, in the course of which the response (OP_BP2) containing the offer to share the second wide area telecommunications network moreover contains:
- the type to which the second wide area telecommunications network belongs,
- the address of a device for the second terminal to access the second wide area telecommunications network,
- the bandwidth offered by the second terminal.

12. Terminal (T2) capable of providing another terminal connected to a first wide area telecommunications network with a second wide area telecommunications network to which said terminal is connected, for the purpose of downloading a content into said other terminal from a server,
said terminal being **characterized in that** it comprises:
- means (DISC2) for discovering a connection from the terminal to the other terminal, via a local area telecommunications network, the discovery means being adapted to:
• receive, from the other terminal, a discovery request for at least one terminal connected to the other terminal via a local area telecommunications network, said request containing identification information for the server,
• transmit to the other terminal, via the local area telecommunications network, a response to said request that contains an offer to share the second wide area telecommunications network, for the purpose of said content download, the response containing a port identifier associated with said terminal,
- means (COM21) for setting up a communication between the two terminals, said means for setting up communication being adapted to:
• receive on the port of the terminal, from the other terminal, via the local area telecommunications network, a download request for a first content segment determined beforehand by the other terminal from the offer to share,
• take the received identification information for the server as a basis for routing to the server, via the second wide area telecommunications network, the received download request for the first segment,
• receive in response the first content segment from the server, via the second wide area telecommunications network,
• transmit the received first content segment to the other terminal, via the local area telecommunications network.

13. Computer program having program code instructions for executing the steps of the provision method according to Claim 10 or Claim 11 when said program is executed on a computer.
